# EUROPEAN PATENT SPECIFICATION

(11) **EP 4 247 819 B1**
(45) Date of publication and mention of the grant of the patent: **08.07.2026**
(21) Application number: 21823436.7
(22) Date of filing: 17.11.2021
(51) Int. Cl.: C07F 5/06, C08F 210/16, C08F 4/659

(54) **TOLUENE FREE SUPPORTED METHYLALUMOXANE PRECURSOR**
TOLUOLFREIER, GETRÄGERTER METHYLALUMOXANVORLÄUFER
PRÉCURSEUR DE MÉTHYLALUMOXANE SUPPORTÉ EXEMPT DE TOLUÈNE

(30) Priority: 23.11.2020 US 202063117312 P
(43) Date of publication of application: 27.09.2023
(73) Proprietor: ExxonMobil Chemical Patents Inc., Baytown, TX 77520 (US)
(72) Inventor: RIX, Francis, C., Houston, TX 77059 (US); LE, Ky, K., A., Pearland, TX 77584 (US); HARLAN, Charles, J., Houston, TX 77059 (US)
(74) Representative: ExxonMobil Petroleum & Chemical BV
(86) International application number: PCT/US2021/059629
(87) International publication number: WO 2022/108971

(56) References cited:
- WO-A1-2016/170017
- US-A1- 2019 127 499
- BETHLEY CHARLES E. ET AL: "Structural Characterization of Dialkylaluminum Carboxylates:? Models for Carboxylate Alumoxanes", ORGANOMETALLICS, vol. 16, no. 3, 1 February 1997 (1997-02-01), pages 329 - 341, XP055876456, ISSN: 0276-7333, Retrieved from the Internet <URL:https://pubs.acs.org/doi/pdf/10.1021/om960576q> DOI: 10.1021/om960576q
- ANDREAS FISCHBACH ET AL: "Structure−Reactivity Relationships in Rare-Earth Metal Carboxylate-Based Binary Ziegler-Type Catalysts", ORGANOMETALLICS, vol. 25, no. 7, 1 March 2006 (2006-03-01), pages 1626 - 1642, XP055190472, ISSN: 0276-7333, DOI: 10.1021/om060052i
- ZAKHARKLN L I ET AL: "DIALKYLALUMINUM DERIVATIVES OF SATURATED AND UNSATURATED ACIDS", 1 February 1961 (1961-02-01), pages 364 - 365, XP055876465, Retrieved from the Internet <URL:www> [retrieved on 20220105], DOI: 10.1007/bf00919579

## Description

### Field

The present disclosure relates to precursors for making an activator in a catalyst system for olefin polymerization and methods of producing the precursor, the catalyst system, and the polyolefin formed from the catalyst system.

### Background

Polyolefins are widely used commercially because of their robust physical properties. For example, various types of polyethylenes, including high density, low density, and linear low density polyethylenes, are examples of commercially useful polyolefins. Polyolefins are typically prepared with a catalyst (mixed with one or more other components to form a catalyst system) which promotes polymerization of olefin monomers in a reactor, such as a gas phase reactor.

Methylalumoxane (MAO) is a popular activator that may be supported on silica to activate a single site catalyst precursor, e.g., a metallocene, to form an active solid catalyst used in a commercial gas phase reactor to produce single-site polyolefin resins. Commercial MAO is commonly sold as a toluene solution because an aromatic solvent can dissolve MAO without causing any issue observed with other solvents. However, polyolefin products are often used as plastic packaging for food products, and the amount of non-polyolefin compounds, such as toluene, present in the polyolefin products should be minimized.

In addition, MAO is challenging to prepare. MAO is typically formed from the low temperature reaction of trimethylaluminum (TMA) and water in toluene. This reaction is very exothermic and requires special care to control. The commercially available MAO has a short life, typically less than one week under ambient conditions and less than twelve months in cold storage, and the MAO undergoes compositional changes, e.g. gelation, even in cold storage.

Therefore, there is a need for more stable MAO activator. There is also a need for methods of forming such MAO activator and catalyst systems including the MAO activator.

US 2019/127499 A1 discloses methods for preparing a catalyst system that comprises contacting in an aliphatic solvent at least one support material, at least one hydrocarbyl aluminum compound and at least one non-hydrolytic active oxygen-containing compound to form a supported alumoxane (catalyst precursor) and contacting the supported alumoxane with at least one catalyst compound having a Group 3 through Group 12 metal atom or lanthanide metal atom. WO 2016/170017 A1 discloses a process to prepare alkylaluminoxanes by reaction of alkylaluminium with methacrylic acid or a conjugated unsaturated carbonyl-functional compound, such as, for example, 3-methyl-2-butenoic acid, 2-methyl-2-propenoic acid, 4-methyl-3-pentene-2-one or 3-methyl-2-butenal in the presence of an inert organic solvent. It also discloses the alkylaluminoxanes obtainable by the above process and their use. Bethley Charles E. et al. "Structural Characterization of Dialkylaluminum Carboxylates: Models for Carboxylate Alumoxanes", Organometallics, vol. 16, no. 3, 4 February 1997, pages 329-341 discloses the results of a structural characterization of dialkylaluminum carboxylates, [(^{t}Bu)₂Al(µ-O₂CR)]₂. Andreas Fischbach et al. "Structure-Reactivity Relationships in Rare-Earth Metal Carboxylate-Based Binary Ziegler-Type Catalysts", Organometallics, vol. 25, no. 7, 27 March 2006, pages 1626-1642 discloses the results of a study of the organoaluminium-mediated alkylation of tailor-made rare-earth metal carboxylate complexes.

### Summary

The present disclosure relates to processes and compositions for making an activator in a catalyst system for olefin polymerization and methods of producing the precursor, the catalyst system, and the polyolefin formed from the catalyst system.

More specifically, the invention relates to compositions and processes for preparing an alumoxane precursor as described in the attached claims.

### Brief Description of the Drawings

Figure 1 is the vinyl region of ¹H NMR (C₆D₆) spectrum of the catalyst precursor prepared in Comparative 1.
Figure 2 depicts the vinyl region of the ¹H NMR (C₆D₆) spectrum of the concentrated precursor prepared in Example 6a.
Figure 3 depicts the ¹H NMR (C₆D₆) spectrum of the concentrated precursor prepared in Example 6a.
Figure 4 depicts the vinyl Region of an ¹H NMR (C₆D₆) spectrum of the concentrated precursor prepared in Example 6a before and after addition of hemialkoxide Me₂Al(µ-Me)(µ-OCMe₂CMe=CH₂)AlMe₂.
Figure 5 depicts an X-Ray Crystallographic spectrum (Oak Ridge Thermal Ellipsoid Plot (ORTEP structure)) of the [Me₂Al(µ-O₂CCMe=CH₂)]₂ prepared in Example 16a.
Figure 6 depicts the ¹H NMR (C₆D₆) spectrum of the [Me₂Al(µ-O₂CCMe=CH₂)]₂ prepared in Example 16a.
Figure 7 depicts the ¹H NMR (C₆D₆) spectra corresponding to the precursor stability tests of Samples A-C conducted in Ex. 17.
Figure 8 depicts the ¹H NMR (C₆D₆) spectra corresponding to the precursor stability tests of Samples D-F conducted in Ex. 17.
Figure 9 depicts the ¹H NMR (C₆D₆) spectra corresponding to the precursor stability tests of Samples G-I conducted in Ex. 17.

### Detailed Description

The present disclosure relates to processes and compositions (e.g., precursors) for making an activator in a catalyst system for olefin polymerization and methods of producing the precursor, the catalyst system, and the polyolefin formed from the catalyst system.

For purposes of the present disclosure, the numbering scheme for the Periodic Table Groups is used as described in Chemical and Engineering News, v.63(5), pg. 27 (1985). Therefore, a "Group 4 metal" is an element from group 4 of the Periodic Table, e.g., Hf, Ti, or Zr.

As used herein, a "composition" can include the components of the composition and/or one or more reaction product(s) of the components.

"Catalyst productivity" is a measure of how many grams of polymer (P) are produced using a polymerization catalyst comprising W g of catalyst (cat), over a period of time of T hours; and may be expressed by the following formula: P/(T x W) and expressed in units of gPgcat⁻¹hr⁻¹. "Conversion" is the amount of monomer that is converted to polymer product, and is reported as mole percent (mol%) and is calculated based on the polymer yield (weight) and the amount of monomer fed into the reactor. "Catalyst activity" is a measure of how active the catalyst is and is reported as the mass of product polymer (P) produced per mole of catalyst (cat) used (kgP/molcat h). For calculating catalyst activity, also referred to as catalyst productivity, only the weight of the transition metal component of the catalyst is used.

An "olefin," alternatively referred to as "alkene," is a linear, branched, or cyclic compound of carbon and hydrogen having at least one double bond. For purposes of this specification and the claims appended thereto, when a polymer or copolymer is referred to as comprising an olefin, the olefin present in such polymer or copolymer is the polymerized form of the olefin. For example, when a copolymer is said to have an "ethylene" content of 35 wt% to 55 wt%, it is understood that the mer unit in the copolymer is derived from ethylene in the polymerization reaction and said derived units are present at 35 wt% to 55 wt%, based upon the weight of the copolymer. A "polymer" has two or more of the same or different mer units. A "homopolymer" is a polymer having mer units that are the same. A "copolymer" is a polymer having two or more mer units that are different from each other. A "terpolymer" is a polymer having three mer units that are different from each other. Accordingly, the definition of copolymer, as used herein, includes terpolymers and the like. "Different" as used to refer to mer units indicates that the mer units differ from each other by at least one atom or are different isomerically. An "ethylene polymer" or "ethylene copolymer" is a polymer or copolymer comprising at least 50 mol% ethylene derived units, a "propylene polymer" or "propylene copolymer" is a polymer or copolymer comprising at least 50 mol% propylene derived units, and so on.

As used herein, and unless otherwise specified, the term "Cₙ" means hydrocarbon(s) having n carbon atom(s) per molecule, wherein n is a positive integer.

The term "hydrocarbon" means a class of compounds containing hydrogen bound to carbon, and encompasses (i) saturated hydrocarbon compounds, (ii) unsaturated hydrocarbon compounds, and (iii) mixtures of hydrocarbon compounds (saturated and/or unsaturated), including mixtures of hydrocarbon compounds having different values of n. Likewise, a "Cm-Cy" group or compound refers to a group or compound comprising carbon atoms at a total number thereof in the range from m to y. Thus, a C₁-C₅₀ alkyl group refers to an alkyl group comprising carbon atoms at a total number thereof in the range from 1 to 50.

The terms "group," "radical," and "substituent" may be used interchangeably.

The terms "hydrocarbyl radical," "hydrocarbyl group," or "hydrocarbyl" may be used interchangeably and are defined to mean a group consisting of hydrogen and carbon atoms only. Preferred hydrocarbyls are C₁-C₁₀₀ radicals that may be linear, branched, or cyclic, and when cyclic, aromatic or non-aromatic. Examples of such radicals include, but are not limited to, alkyl groups such as methyl, ethyl, n-propyl, isopropyl, n-butyl, isobutyl, sec-butyl, tert-butyl, pentyl, iso-amyl, hexyl, octyl cyclopropyl, cyclobutyl, cyclopentyl, cyclohexyl, cyclooctyl, and the like, aryl groups, such as phenyl, benzyl naphthyl, and the like.

Unless otherwise indicated, (e.g., the definition of "substituted hydrocarbyl", etc.), the term "substituted" means that at least one hydrogen atom has been replaced with at least one non-hydrogen group, such as a hydrocarbyl group, a heteroatom, or a heteroatom containing group, such as halogen (such as Br, Cl, F or I) or at least one functional group such as -NR*₂, - OR*,
-SeR*, -TeR*, -PR*₂, -AsR*₂, -SbR*₂, -SR*, -BR*₂, -SiR*₃, -GeR*₃, -SnR*₃, -PbR*₃, -(CH₂)q-SiR*₃, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic (or polycyclic ring structure), or where at least one heteroatom has been inserted within a hydrocarbyl ring.

The term "substituted hydrocarbyl" means a hydrocarbyl radical in which at least one hydrogen atom of the hydrocarbyl radical has been substituted with at least one heteroatom (such as halogen, e.g., Br, Cl, F or I) or heteroatom-containing group (such as a functional group, e.g., -NR*₂, -OR*, -SeR*, -TeR*, -PR*₂, -AsR*₂, -SbR*₂, -SR*, -BR*₂, -SiR*₃, -GeR*₃, -SnR*₃, -PbR*₃, -(CH₂)q-SiR*₃, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic (or polycyclic ring structure), or where at least one heteroatom has been inserted within a hydrocarbyl ring.

The terms "alkyl radical," and "alkyl" are used interchangeably throughout this disclosure. For purposes of this disclosure, "alkyl radical" is defined to be C₁-C₁₀₀ alkyls that may be linear, branched, or cyclic. Examples of such radicals can include methyl, ethyl, n-propyl, isopropyl, n-butyl, isobutyl, sec-butyl, tert-butyl, pentyl, iso-amyl, hexyl, octyl cyclopropyl, cyclobutyl, cyclopentyl, cyclohexyl, cyclooctyl, and the like including their substituted analogues. Substituted alkyl radicals are radicals in which at least one hydrogen atom of the alkyl radical has been substituted with at least a non-hydrogen group, such as a hydrocarbyl group, a heteroatom, or a heteroatom containing group, such as halogen (such as Br, Cl, F or I) or at least one functional group such as -NR*₂, -OR*, -SeR*, -TeR*, -PR*₂, -AsR*₂, -SbR*₂, -SR*, -BR*₂, -SiR*₃, -GeR*₃, -SnR*₃, -PbR*₃, -(CH₂)q-SiR*₃, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic (or polycyclic ring structure), or where at least one heteroatom has been inserted within a hydrocarbyl ring.

The terms "alkoxy" or "aryloxy" mean an alkyl or aryl group bound to an oxygen atom, such as an alkyl ether or aryl ether group/radical connected to an oxygen atom and can include those where the alkyl group is a C₁ to C₁₀ hydrocarbyl. The alkyl group may be straight chain, branched, or cyclic. The alkyl group may be saturated or unsaturated. Examples of suitable alkoxy and aryloxy radicals can include methoxy, ethoxy, n-propoxy, iso-propoxy, n-butoxy, iso-butoxy, sec-butoxy, tert-butoxy, phenoxyl, and the like.

The term "aryl" or "aryl group" means an aromatic ring (typically made of 6 carbon atoms) and the substituted variants thereof, such as phenyl, 2-methyl-phenyl, xylyl, 4-bromo-xylyl. Likewise, heteroaryl means an aryl group where a ring carbon atom (or two or three ring carbon atoms) has been replaced with a heteroatom, such as N, O, or S. As used herein, the term "aromatic" also refers to pseudoaromatic heterocycles which are heterocyclic substituents that have similar properties and structures (nearly planar) to aromatic heterocyclic ligands, but are not by definition aromatic.

Where isomers of a named alkyl, alkenyl, alkoxide, or aryl group exist (e.g., n-butyl, iso-butyl, sec-butyl, and tert-butyl) reference to one member of the group (e.g., n-butyl) shall expressly disclose the remaining isomers (e.g., iso-butyl, sec-butyl, and tert-butyl) in the family. Likewise, reference to an alkyl, alkenyl, alkoxide, or aryl group without specifying a particular isomer (e.g., butyl) expressly discloses all isomers (e.g., n-butyl, iso-butyl, sec-butyl, and tertbutyl).

A "metallocene" catalyst compound is a transition metal catalyst compound having one, two or three, typically one or two, substituted or unsubstituted cyclopentadienyl ligands bound to the transition metal, typically a metallocene catalyst is an organometallic compound containing at least one π-bound cyclopentadienyl moiety (or substituted cyclopentadienyl moiety). Substituted or unsubstituted cyclopentadienyl ligands include substituted or unsubstituted indenyl, fluorenyl, tetrahydro-*s*-indacenyl, tetrahydro-*as*-indacenyl, benz[*f*]indenyl, benz[*e*]indenyl, tetrahydrocyclopenta[*b*]naphthalene, tetrahydrocyclopenta[*a*]naphthalene, and the like.

As used herein, Mn is number average molecular weight, Mw is weight average molecular weight, and Mz is z average molecular weight, wt% is weight percent, and mol% is mole percent. Molecular weight distribution (MWD), also referred to as polydispersity index (PDI), is defined to be Mw divided by Mn. Unless otherwise noted, all molecular weight units (e.g., Mw, Mn, Mz) are g/mol (g mol⁻¹).

The following abbreviations may be used herein: Me is methyl, MAA is methacrylic acid, TMA is trimethylaluminum, MAO is methylalumoxane, TIBAL (also referred to as TIBA) is triisobutylaluminum, THF (also referred to as thf) is tetrahydrofuran, RT is room temperature (and is 23 degrees Celsius unless otherwise indicated).

A "catalyst system" is a combination of at least one catalyst compound, at least one activator, an optional co-activator, and an optional support material. When "catalyst system" is used to describe such a pair before activation, it means the unactivated catalyst complex (precatalyst) together with an activator and, optionally, a co-activator. When it is used to describe such a pair after activation, it means the activated complex and the activator or other charge-balancing moiety. The transition metal compound may be neutral as in a precatalyst, or a charged species with a counter ion as in an activated catalyst system. For purposes herein, when catalyst systems are described as comprising neutral stable forms of the components, it is well understood by one of ordinary skill in the art, that the ionic form of the component is the form that reacts with the monomers to produce polymers. A polymerization catalyst system is a catalyst system that can polymerize monomers to polymer.

In the description herein, the catalyst may be described as a catalyst, a catalyst precursor, a pre-catalyst compound, catalyst compound or a transition metal compound, and these terms are used interchangeably.

For purposes herein, particle size (PS) or diameter, and distributions thereof, are determined by laser diffraction using a MASTERSIZER 3000 (range of 1 to 3500 µm) available from Malvern Instruments, Ltd., Worcestershire, England, or an LS 13 320 MW with a micro liquid module (range of 0.4 to 2000 µm) available from Beckman Coulter, Inc., Brea, California. Average PS refers to the distribution of particle volume with respect to particle size.

For purposes herein, the surface area (SA, also called the specific surface area or BET surface area), pore volume (PV), and pore diameter (PD) of catalyst support materials are determined by the Brunauer-Emmett-Teller (BET) method and/or Barrett-Joyner-Halenda (BJH) method using adsorption-desorption of nitrogen (temperature of liquid nitrogen: 77 K) with a MICROMERITICS TRISTAR II 3020 instrument or MICROMERITICS ASAP 2420 instrument after degassing of the powders for 4 to 8 hours at 100 to 300°C for raw/calcined silica or 4 hours to overnight at 40°C to 100°C for silica supported alumoxane. More information regarding the method can be found, for example, in "Characterization of Porous Solids and Powders: Surface Area, Pore Size and Density," S. Lowell et al., Springer, 2004. PV refers to the total PV, including both internal and external PV.

One way to determine the spatial distribution of alumoxane or alumoxane precursor of the present disclosure within the pores of a support material composition is to determine the ratio of Al/Si in the uncrushed to crushed material where support material is a supported alumoxane precursor, alumoxane or catalyst on silica. For example, when the support material composition is SiO₂, the composition can have an uncrushed (Al/Si)/crushed (Al/Si) value of from about 1 to about 4, such as from about 1 to about 3, for example from about 1 to about 2, such as about 1, as determined by X-ray Photoelectron Spectroscopy. As used herein, the term "crushed" is defined as a support material that has been ground into fine particles via mortar and pestle. As used herein, the term "uncrushed" is defined as a material that has not been ground into fine particles via mortar and pestle. To measure an uncrushed (Al/Si)/crushed (Al/Si) value, an X-ray Photoelectron spectrum is obtained for a support material. The metal content of the outer surface of the support material is determined as a wt% of the outer surface using the spectrum. Then, the catalyst system is ground into fine particles using a mortar and a pestal. A subsequent X-ray Photoelectron spectrum is obtained for the fine particles, and metal content of the fine particle surfaces is determined as a wt% using the subsequent X-Ray Photoelectron spectrum. The wt% value determined for the uncrushed support material is divided by the wt% value for the crushed supported alumoxane precursor (*i.e.*, the fine particles) to provide an uncrushed/crushed value. A value of 1 indicates completely uniform metal distribution on the outer surface and surfaces within void spaces within the catalyst system. A value of greater than 1 indicates a greater amount of metal on the outer surface of the support material composition than in the voids of the support material composition. A value of less than 1 indicates a greater amount of metal on the surface of the support material composition within the voids than metal on the outer surface of the support material composition.

### Alumoxane Precursor

The alumoxane precursor is formed by combining at least one non-hydrolytic oxygen-containing compound to at least one hydrocarbyl aluminum in an aliphatic hydrocarbon fluid, which acts as a solvent, at a temperature of less than about 70 degrees.

The at least one non-hydrolytic oxygen-containing compound comprises a compound represented by the Formula (I): 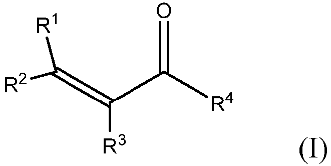 where R¹ and R² independently are hydrogen or a hydrocarbyl group (preferably C₁ to C₂₀ alkyl, alkenyl or C₅ to C₂₀ aryl group, such as selected from methyl, ethyl, propyl, butyl, pentyl, hexyl, heptyl, octyl, nonyl, decyl, undecyl, dodecyl, or phenyl), R³ is a hydrocarbyl group, optionally R¹, R², or R³ may be joined together to form a ring, and R⁴ is -OH (hydroxide), - OC(O)CR³=CR¹R², OCR³3, -F, or -Cl, and such that the compound represented by Formula (I) is methacrylic acid

In aspects of the invention, the at least one non-hydrolytic oxygen-containing compound may comprise a compound represented by the Formula (**II**): 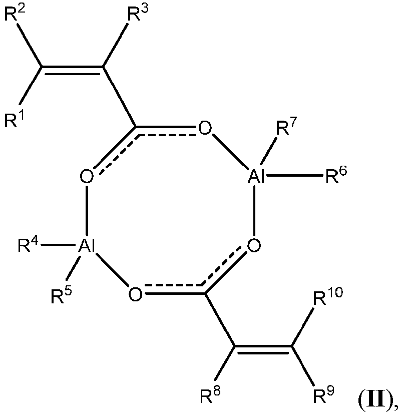 where R¹ R², R⁹, and R¹⁰ independently are hydrogen; R³ and R⁸ is a hydrocarbyl group;; and each of R⁴, R⁵, R⁶, and R⁷ is methyl. The compound represented by the Formula (**II**) comprises the reaction product of trimethylaluminum (TMA) and an unsaturated carboxylic acid such that the compound is represented by the Formula (**III**).

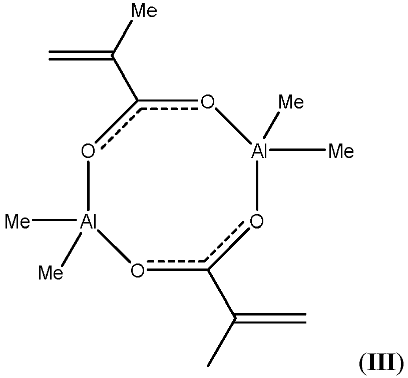

In certain aspects, a stable composition may be formed from the compound represented by Formula (**II**). In such aspects, the composition may comprise the compound represented by Formula (**II**) in an amount greater than about 1 wt% based on the total weight of the composition, such as greater than about 50 wt%, or greater than about 75 wt%, or greater than about 90 wt%.

The at least one hydrocarbyl aluminum comprises a compound represented by the formula R¹R²R³Al, wherein each of R¹, R², and R³ is independently a methyl such that the at least one hydrocarbyl aluminum comprises trimethylaluminum.

The at least one hydrocarbyl aluminum is introduced in excess of the at least one non-hydrolytic oxygen-containing compound. Without wishing to be bound by theory, it is believed that adding the hydrocarbyl aluminum in excess of the non-hydrolytic oxygen-containing compound ensures that the surface of the support material particles described herein may be coated with both the alumoxane precursor and the hydrocarbyl aluminum to form a supported alumoxane precursor. It is further believed that heating of the supported alumoxane precursor can cause the hydrocarbyl aluminum to react with the alumoxane precursor to form the supported alumoxane described herein. The at least one hydrocarbyl aluminum is introduced at a concentration such that the molar ratio of aluminum to non-hydrolytic oxygen in the solution is greater than or equal to 1.5. Often, the at least one hydrocarbyl aluminum may be introduced at a concentration of greater than or equal to 3 molar equivalents of the at least one non-hydrolytic oxygen-containing compound. For example, the molar ratio of the at least one non-hydrolytic oxygen-containing compound to the at least one hydrocarbyl aluminum can be from about 1:3 to about 1:9, such as from about 1:3 to about 1:5. Alternatively, in aspects where the at least one non-hydrolytic oxygen-containing compound comprises a compound of the Formula (**II**) or Formula (**III**), the at least one hydrocarbyl aluminum is introduced at a concentration of greater than or equal to 2 molar equivalents of the at least one non-hydrolytic oxygen-containing compound. For example, the molar ratio of the at least one non-hydrolytic oxygen-containing compound to the at least one hydrocarbyl aluminum in such aspects can be from about 1:2 to about 1:9, such as from about 1:2 to about 1:5. Often, the molar ratio of the at least one hydrocarbyl aluminum to the at least one non-hydrolytic oxygen containing compound is greater than or equal to [A*B + 0.5(C*D)]/B, wherein A is 2 or 3; B is the moles of the non-hydrolytic oxygen containing compound; C is the moles of hydrocarbyl aluminum chemisorbed to the surface of the support material in the absence of the non-hydrolytic oxygen containing compound per gram of the support material; and D is the grams of the support material. In such aspects, A is generally 2 if the at least one non-hydrolytic oxygen containing compound comprises a compound represented by the Formula (**II**), and A is generally 3 if the at least one non-hydrolytic oxygen containing compound comprises a compound represented by the Formula (**I**). Further, in such aspects, B/D is generally greater than or equal to about 1.5 mmol/g.

Suitable aliphatic hydrocarbon fluids are aliphatic hydrocarbon fluid having a boiling point of less than about 70 degrees Celsius, such as from about 20 degrees Celsius to about 70 degrees Celsius. The boiling point of the aliphatic hydrocarbon fluid may be lower than the boiling point of the hydrocarbyl aluminum. In at least one embodiment, the boiling point of the aliphatic solvent is at least 40 degrees Celsius lower than the boiling point of the hydrocarbyl aluminum, such as at least 50 degrees Celsius lower or at least 60 degrees Celsius lower. Suitable aliphatic hydrocarbon fluids include, but are not limited to, propane, butanes, pentanes, hexanes, heptanes, octanes, nonanes, decanes, undecanes, dodecanes, tridecanes, tetradecanes, pentadecanes, hexadecanes, or combination(s) thereof; preferable aliphatic hydrocarbon fluids can include normal paraffins (such as NORPAR^{®} hydrocarbon fluids available from ExxonMobil Chemical Company in Houston, TX), isoparaffins (such as ISOPAR^{®} hydrocarbon fluids available from ExxonMobil Chemical Company in Houston, TX), and combinations thereof. For example, the aliphatic hydrocarbon fluid can be selected from C₃ to C₁₂ linear, branched or cyclic alkanes. In some embodiments, the aliphatic hydrocarbon fluid is substantially free of aromatic hydrocarbons. Preferably, the aliphatic hydrocarbon fluid is essentially free of toluene. Useful aliphatic hydrocarbon fluids are ethane, propane, n-butane, 2-methylpropane, n-pentane, cyclopentane, 2-methylbutane, 2-methylpentane, n-hexane, cyclohexane, methylcyclopentane, 2,4-dimethylpentane, n-heptane, 2,2,4-trimethylpentane, methylcyclohexane, octane, nonane, decane, or dodecane, and mixture(s) thereof. In at least one embodiment, aromatics are present in the aliphatic hydrocarbon fluid at less than 1 wt%, such as less than 0.5 wt%, such as at 0 wt% based upon the weight of the hydrocarbon fluid. In at least one embodiment, the aliphatic hydrocarbon fluid is n-pentane and/or 2-methylpentane.

The combination of the at least one hydrocarbyl aluminum with the at least one non-hydrolytic oxygen-containing compound and a support material is generally conducted at a temperature of less than about 70 degrees Celsius. Often, the combination may be done at the reflux temperature of the aliphatic hydrocarbon fluid. The reflux temperature is based on the boiling point of the aliphatic hydrocarbon fluid, such as from about 20 degrees Celsius to about 70 degrees Celsius or from about 25 degrees Celsius to about 70 degrees Celsius.

Typically, the at least one non-hydrolytic oxygen-containing compound is combined with the at least one hydrocarbyl aluminum prior to combining with the support material. Often, the at least one non-hydrolytic oxygen-containing compound may be dissolved in an aliphatic hydrocarbon fluid prior to combining with the at least one hydrocarbyl aluminum, which may also be dissolved in an aliphatic hydrocarbon fluid. In such aspects, the aliphatic hydrocarbon fluid in which the at least one non-hydrolytic oxygen-containing compound and the at least one hydrocarbyl aluminum are dissolved may be the same or different. In at least one embodiment, an alumoxane precursor in solution can be prepared by addition of a solution of methylacrylic acid (MAA) in pentane to a solution of trimethylaluminum (TMA) in pentane at a rate sufficient to maintain a controlled reflux (i.e., maintaining the reaction temperature at about 36.1 degrees Celsius, which is the boiling point of pentane). In such aspects, the MAA may be introduced to the TMA at a molar ratio from about 1:3 to about 1:5. Generally, both the effectiveness of the alumoxane precursor as a catalyst activator and the activity of the resulting supported catalyst increase as the ratio of the TMA/MAA increases.

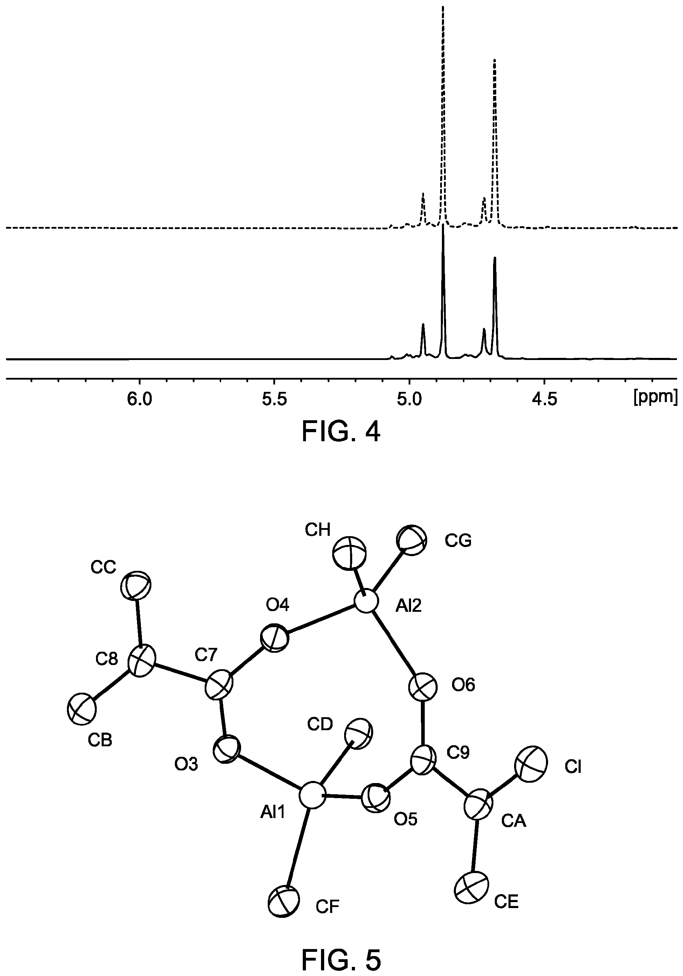

The alumoxane precursor, both the concentrated form and the solution form, can be identified by a characteristic spectroscopic pattern in the ¹H NMR (C₆D₆). There is a first set of signals in a region from about 4.5 ppm to about 5.1 ppm and a second set of signals in an ¹H Nuclear Magnetic Resonance spectrum in a region from about 5.1 ppm to about 6.5 ppm. Without wishing to be bound by theory, it is believed that the signals from 5.1 to 6.5 ppm represent vinyl CH of bridging carboxylates (as in the dimer Me₂Al(µ-O₂CCMe=CH₂)₂AlMe₂ shown in Fig 5.) while the signals from 4.5 to 5.1 ppm represent the vinyl CH of bridging alkoxides such as Me₂Al(µ-Me)(µ-OCMe₂CMe=CH₂)AlMe₂ shown in Fig 4. Generally, there are very little bridging carboxylates present in the precursor. The ratio of the first set of signals to the second set of signals is greater than or equal to about 2.8. Without wishing to be bound by theory, the presence of carboxylates in the precursor is believed to be detrimental to forming MAO on supports.

### Support Materials

In embodiments herein, a support material may be utilized. In at least one embodiment, the support material is a porous support material, for example, talc, or inorganic oxides. Other support materials include zeolites, clays, organoclays, or any other suitable organic or inorganic support material and the like, or mixtures thereof.

In at least one embodiment, the support material is an inorganic oxide. Suitable inorganic oxide materials for use in catalyst systems herein include Groups 2, 4, 13, and 14 metal oxides, such as silica, alumina, and mixtures thereof. Other inorganic oxides that may be employed either alone or in combination with the silica, or alumina are magnesia, titania, zirconia, and the like. Other suitable support materials, however, can be used, for example, functionalized polyolefins, such as polypropylene. Support materials may include magnesia, titania, zirconia, montmorillonite, phyllosilicate, zeolites, talc, clays, and the like. Also, combinations of these support materials may be used, for example, silica-chromium, silica-alumina, silica-titania, and the like. Support materials may include Al₂O₃, ZrO₂, SiO₂, SiO₂/Al₂O₃, SiO₂/TiO₂, silica clay, silicon oxide/clay, or mixtures thereof. Other suitable support materials, however, can be employed, for example, finely divided functionalized polyolefins, such as finely divided polyethylene, polypropylene, and polystyrene with functional groups that are able to absorb water, e.g., oxygen or nitrogen containing groups such as -OH, -RC=O, -OR, and -NR₂. Particularly useful supports include magnesia, titania, zirconia, montmorillonite, phyllosilicate, zeolites, talc, clays, silica clay, silicon oxide clay, and the like. Also, combinations of these support materials may be used, for example, silica-chromium, silica-alumina, silica-titania, and the like. In at least one embodiment, the support material is selected from Al₂O₃, ZrO₂, SiO₂, SiO₂/Al₂O₂, silica clay, silicon oxide/clay, or mixtures thereof. The support material may be fluorided.

As used herein, the phrases "fluorided support" and "fluorided support composition" mean a support, desirably particulate and porous, which has been treated with at least one inorganic fluorine containing compound. For example, the fluorided support composition can be a silicon dioxide support wherein a portion of the silica hydroxyl groups has been replaced with fluorine or fluorine containing compounds. Suitable fluorine containing compounds include, but are not limited to, inorganic fluorine containing compounds and/or organic fluorine containing compounds.

Fluorine compounds suitable for providing fluorine for the support may be organic or inorganic fluorine compounds and are desirably inorganic fluorine containing compounds. Such inorganic fluorine containing compounds may be any compound containing a fluorine atom as long as it does not contain a carbon atom. Particularly desirable are inorganic fluorine-containing compounds selected from NH₄BF₄, (NH₄)₂SiF₆, NH₄PF₆, NH₄F, (NH₄)₂TaF₇, NH₄NbF₄, (NH₄)₂GeF₆, (NH₄)₂SmF₆, (NH₄)₂TiF₆, (NH₄)₂ZrF₆, MoF₆, ReF₆, GaF₃, SO₂ClF, F₂, SiF₄, SF₆, ClF₃, ClF₅, BrF₅, IF₇, NF₃, HF, BF₃, NHF₂, NH₄HF₂, and combinations thereof. In at least one embodiment, ammonium hexafluorosilicate and ammonium tetrafluoroborate are used.

In at least one embodiment, the support material comprises a support material treated with an electron-withdrawing anion. The support material can be silica, alumina, silica-alumina, silica-zirconia, alumina-zirconia, aluminum phosphate, heteropolytungstates, titania, magnesia, boria, zinc oxide, mixed oxides thereof, or mixtures thereof; and the electron-withdrawing anion is selected from fluoride, chloride, bromide, phosphate, triflate, bisulfate, sulfate, or any combination thereof.

An electron-withdrawing component can be used to treat the support material. The electron-withdrawing component can be any component that increases the Lewis or Brønsted acidity of the support material upon treatment (as compared to the support material that is not treated with at least one electron-withdrawing anion). In at least one embodiment, the electron-withdrawing component is an electron-withdrawing anion derived from a salt, an acid, or other compound, such as a volatile organic compound, that serves as a source or precursor for that anion. Electron-withdrawing anions can be sulfate, bisulfate, fluoride, chloride, bromide, iodide, fluorosulfate, fluoroborate, phosphate, fluorophosphate, trifluoroacetate, triflate, fluorozirconate, fluorotitanate, phospho-tungstate, or mixtures thereof, or combinations thereof. An electron-withdrawing anion can be fluoride, chloride, bromide, phosphate, triflate, bisulfate, or sulfate, and the like, or any combination thereof, at least one embodiment of this disclosure. In at least one embodiment, the electron-withdrawing anion is sulfate, bisulfate, fluoride, chloride, bromide, iodide, fluorosulfate, fluoroborate, phosphate, fluorophosphate, trifluoroacetate, triflate, fluorozirconate, fluorotitanate, or combinations thereof.

Thus, for example, the support material suitable for use in the catalyst systems of the present disclosure can be one or more of fluorided alumina, chlorided alumina, bromided alumina, sulfated alumina, fluorided silica-alumina, chlorided silica-alumina, bromided silica-alumina, sulfated silica-alumina, fluorided silica-zirconia, chlorided silica-zirconia, bromided silica-zirconia, sulfated silica-zirconia, fluorided silica-titania, fluorided silica-coated alumina, sulfated silica-coated alumina, phosphated silica-coated alumina, and the like, or combinations thereof. In at least one embodiment, the activator-support can be, or can comprise, fluorided alumina, sulfated alumina, fluorided silica-alumina, sulfated silica-alumina, fluorided silica-coated alumina, sulfated silica-coated alumina, phosphated silica-coated alumina, or combinations thereof. In another embodiment, the support material includes alumina treated with hexafluorotitanic acid, silica-coated alumina treated with hexafluorotitanic acid, silica-alumina treated with hexafluorozirconic acid, silica-alumina treated with trifluoroacetic acid, fluorided boria-alumina, silica treated with tetrafluoroboric acid, alumina treated with tetrafluoroboric acid, alumina treated with hexafluorophosphoric acid, or combinations thereof. Further, any of these activator-supports optionally can be treated with a metal ion.

Nonlimiting examples of cations suitable for use in the present disclosure in the salt of the electron-withdrawing anion include ammonium, trialkyl ammonium, tetraalkyl ammonium, tetraalkyl phosphonium, H+, [H(OEt₂)₂]+, [HNR₃]+ (R = C₁-C₂₀ hydrocarbyl group, which may be the same or different) or combinations thereof.

Further, combinations of one or more different electron-withdrawing anions, in varying proportions, can be used to tailor the specific acidity of the support material to a desired level. Combinations of electron-withdrawing components can be contacted with the support material simultaneously or individually, and in any order that provides a desired chemically-treated support material acidity. For example, in at least one embodiment, two or more electron-withdrawing anion source compounds in two or more separate contacting steps.

In one embodiment of the present disclosure, one example of a process by which a chemically-treated support material is prepared is as follows: a selected support material, or combination of support materials, can be contacted with a first electron-withdrawing anion source compound to form a first mixture; such first mixture can be calcined and then contacted with a second electron-withdrawing anion source compound to form a second mixture; the second mixture can then be calcined to form a treated support material. In such a process, the first and second electron-withdrawing anion source compounds can be either the same or different compounds.

The method by which the oxide is contacted with the electron-withdrawing component, typically a salt or an acid of an electron-withdrawing anion, can include, but is not limited to, gelling, co-gelling, impregnation of one compound onto another, and the like, or combinations thereof. Following a contacting method, the contacted mixture of the support material, electron-withdrawing anion, and optional metal ion, can be calcined.

According to another embodiment of the present disclosure, the support material can be treated by a process comprising: (i) contacting a support material with a first electron-withdrawing anion source compound to form a first mixture; (ii) calcining the first mixture to produce a calcined first mixture; (iii) contacting the calcined first mixture with a second electron-withdrawing anion source compound to form a second mixture; and (iv) calcining the second mixture to form the treated support material.

It is preferred that the support material, most preferably an inorganic oxide, has a surface area between about 10 m²/g and about 700 m²/g, pore volume between about 0.1 cc/g and about 4.0 cc/g and average particle size between about 5 µm and about 500 µm. In at least one embodiment, the surface area of the support material is between about 50 m²/g and about 500 m²/g, pore volume between about 0.5 cc/g and about 3.5 cc/g and average particle size between about 10 µm and about 200 µm. The surface area of the support material may be between about 100 m²/g and about 400 m²/g, pore volume between about 0.8 cc/g and about 3.0 cc/g and average particle size between about 5 µm and about 100 µm. The average pore size of the support material may be between about 10 Å and about 1000 Å, such as between about 50 Å and about 500 Å, such as between about 75 Å and about 350 Å. In at least one embodiment, the support material is a amorphous silica with surface area=300-400 m²/gm; pore volume of 0.9-1.8 cm³/gm. In at least one embodiment, the supported material may optionally be a sub-particle containing silica with average sub-particle size in the range of 0.05 to 5 micron, e.g., from the spray drying of average particle size in the range of 0.05 to 5 micron small particle to form average particle size in the range 5 to 200 micron large main particles. In at least one embodiment, the supported material may optionally have pores with pore diameter = or > 100 angstrom at least 20% of the total pore volume defined by BET method. Non-limiting example silicas are Grace Davison's 952, 955, and 948; PQ Corporation's ES70 series, PD 14024, PD16042, and PD16043; Asahi Glass Chemical (AGC)'s D70-120A, DM-H302, DM-M302, DM-M402, DM-L302, and DM-L402; Fuji's P-10/20 or P-10/40; and the like.

The support material, such as an inorganic oxide, optionally has a surface area of from

50 m²/g to 800 m²/g, a pore volume in the range of from 0.5 cc/g to 5.0 cc/g and an average particle size in the range of from 1 µm to 200 µm.

The support material should be dry, that is, substantially free of absorbed water. Drying of the support material can be effected by heating or calcining at 100 degrees Celsius to 1,000 degrees Celsius, such as at least about 600 degrees Celsius. When the support material is silica, it is heated to at least 200 degrees Celsius, such as 200 degrees Celsius to 900 degrees Celsius, such as at about 600 degrees Celsius; and for a time of 1 minute to about 100 hours, from 12 hours to 72 hours, or from 24 hours to 60 hours. The calcined support material should have at least some reactive hydroxyl (OH) groups to produce supported catalyst systems of the present disclosure. The calcined support material is then contacted with at least one polymerization catalyst comprising at least one catalyst compound and an activator.

### Supported Alumoxane Precursor

A supported alumoxane precursor may be formed by coating particles of a support material, such as silica, with an alumoxane precursor. In one embodiment, the supported precursor may be formed by mixing the alumoxane precursor and an alkylaluminum in an aliphatic hydrocarbon fluid, followed by removing at least a portion of the aliphatic hydrocarbon fluid by distilling the solution at a pressure of greater than about 50.7 kPa (0.5 atm). Generally, the aliphatic hydrocarbon fluid is preferentially removed over the unreacted hydrocarbyl aluminum present in the solution. For example, typically the concentration of the unreacted hydrocarbyl aluminum present in the solution is maintained during the distillation because the boiling point of the hydrocarbyl aluminum is greater than that of the aliphatic hydrocarbon fluid. Generally, supported alumoxane precursor comprises from about 1 wt% to about 50 wt% of the aliphatic hydrocarbon fluid based on the total weight of the supported alumoxane precursor. For example, the supported alumoxane precursor may include from about 1 wt% to about 40 wt% of the aliphatic hydrocarbon fluid based on the total weight of the supported alumoxane precursor, such as from about 1 wt% to about 30 wt%, or from about 1 wt% to about 20 wt%.

The particles of the support material can be coated with both the alumoxane precursor and the alkylaluminum. In at least one embodiment, the alumoxane precursor is evenly distributed on the support material and covers over 50% of the surface area of the support material. By introducing the alkylaluminum in excess of the non-hydrolytic oxygen compound as described herein, both the alkylaluminum and the alumoxane precursor are typically present on the surface of the particles. Subsequent heating of the particles can cause the alkylaluminum to react with the alumoxane precursor to form alkylalumoxane, such as MAO. In at least one embodiment, the total amount of the supported alumoxane precursor includes from about 1 wt% to about 90 wt% of the alkylaluminum. In at least one embodiment, the molar ratio of the alkylaluminum to the alumoxane precursor in the supported alumoxane precursor ranges from about 1:10 to about 10:1, such as about 4:1. The supported alumoxane precursor is stable at ambient and cold temperatures, such as less than about 25 degrees Celsius and is easy to store and ship.

### Supported Alumoxane

The supported alumoxane may be formed by heating the supported alumoxane precursor to a temperature greater than the boiling point of the aliphatic hydrocarbon fluid and less than about 160 degrees Celsius, such as from about 70 degrees Celsius to about 120 degrees Celsius. In at least one example, the supported alumoxane is SMAO. Often, heating the supported precursor produces volatile compounds. In such aspects, the methods described herein may include removing at least a portion of the volatile compounds, and optionally derivatives thereof. Thus, the methods described herein include forming an alumoxane precursor, forming a supported alumoxane precursor, and forming the supported alumoxane. Conventional methods for forming the supported alumoxane include forming an intermediate MAO, which is difficult to store and ship. The shelf lives of an alumoxane precursor and a supported alumoxane precursor of the present disclosure can be longer than that of MAO. In addition, it is easier to ship the alumoxane precursor and the supported alumoxane precursor compared to shipping MAO due to the stability of the alumoxane precursor and the supported alumoxane precursor.

### Catalyst Compounds

In at least one embodiment, the present disclosure provides a catalyst system comprising a catalyst compound having a metal atom. The catalyst compound can be a metallocene catalyst compound. The metal can be a Group 3 through Group 12 metal atom, such as Group 3 through Group 10 metal atoms, or lanthanide Group atoms. The catalyst compound having a Group 3 through Group 12 metal atom can be monodentate or multidentate, such as bidentate, tridentate, or tetradentate, where a heteroatom of the catalyst, such as phosphorous, oxygen, nitrogen, or sulfur is chelated to the metal atom of the catalyst. Non-limiting examples include bis(phenolate)s. In at least one embodiment, the Group 3 through Group 12 metal atom is selected from Group 5, Group 6, Group 8, or Group 10 metal atoms. In at least one embodiment, a Group 3 through Group 10 metal atom is selected from Cr, Sc, Ti, Zr, Hf, V, Nb, Ta, Mn, Re, Fe, Ru, Os, Co, Rh, Ir, and Ni. In at least one embodiment, a metal atom is selected from Groups 4, 5, and 6 metal atoms. In at least one embodiment, a metal atom is a Group 4 metal atom selected from Ti, Zr, or Hf. The oxidation state of the metal atom can range from 0 to +7, for example +1, +2, +3, +4, or +5, for example +2, +3 or +4.

A catalyst compound of the present disclosure can be a chromium or chromium-based catalyst. Chromium-based catalysts include chromium oxide (CrO₃) and silylchromate catalysts. Chromium catalysts have been the subject of much development in the area of continuous fluidized-bed gas-phase polymerization for the production of polyethylene polymers. Such catalysts and polymerization processes have been described, for example, in US Patent Application Publication No. 2011/0010938 and US Patent Nos. 6,833,417, 6,841,630, 6,989,344, 7,202,313, 7,504,463, 7,563,851, 7,915,357, 8,101,691 8,129,484 and 8,420,754.

Metallocene catalyst compounds as used herein include metallocenes comprising Group 3 to Group 12 metal complexes, preferably, Group 4 to Group 6 metal complexes, for example, Group 4 metal complexes. The metallocene catalyst compound of catalyst systems of the present disclosure may be unbridged metallocene catalyst compounds represented by the formula: Cp^{A}Cp^{B}M'X'ₙ, wherein each Cp^{A} and Cp^{B} is independently selected from cyclopentadienyl ligands and ligands isolobal to cyclopentadienyl, one or both Cp^{A} and Cp^{B} may contain heteroatoms, and one or both Cp^{A} and Cp^{B} may be substituted by one or more R" groups. M' is selected from Groups 3 through 12 atoms and lanthanide Group atoms. X' is an anionic leaving group. n is 0 or an integer from 1 to 4. R" is selected from alkyl, lower alkyl, substituted alkyl, heteroalkyl, alkenyl, lower alkenyl, substituted alkenyl, heteroalkenyl, alkynyl, lower alkynyl, substituted alkynyl, heteroalkynyl, alkoxy, lower alkoxy, aryloxy, alkylthio, lower alkylthio, arylthio, aryl, substituted aryl, heteroaryl, aralkyl, aralkylene, alkaryl, alkarylene, haloalkyl, haloalkenyl, haloalkynyl, heteroalkyl, heterocycle, heteroaryl, a heteroatom-containing group, hydrocarbyl, lower hydrocarbyl, substituted hydrocarbyl, heterohydrocarbyl, silyl, boryl, phosphino, phosphine, amino, amine, ether, and thioether.

In at least one embodiment, each Cp^{A} and Cp^{B} is independently selected from cyclopentadienyl, indenyl, fluorenyl, cyclopentaphenanthreneyl, benzindenyl, fluorenyl, octahydrofluorenyl, cyclooctatetraenyl, cyclopentacyclododecene, phenanthrindenyl, 3,4-benzofluorenyl, 9-phenylfluorenyl, 8-H-cyclopent[a]acenaphthylenyl, 7-H-dibenzofluorenyl, indeno[1,2-9]anthrene, thiophenoindenyl, thiophenofluorenyl, and hydrogenated versions thereof.

The metallocene catalyst compound may be a bridged metallocene catalyst compound represented by the formula: Cp^{A}(A)Cp^{B}M'X'ₙ, wherein each Cp^{A} and Cp^{B} is independently selected from cyclopentadienyl ligands and ligands isolobal to cyclopentadienyl. One or both Cp^{A} and Cp^{B} may contain heteroatoms, and one or both Cp^{A} and Cp^{B} may be substituted by one or more R" groups. M' is selected from Groups 3 through 12 atoms and lanthanide Group atoms. X' is an anionic leaving group. n is 0 or an integer from 1 to 4. (A) is selected from divalent alkyl, divalent lower alkyl, divalent substituted alkyl, divalent heteroalkyl, divalent alkenyl, divalent lower alkenyl, divalent substituted alkenyl, divalent heteroalkenyl, divalent alkynyl, divalent lower alkynyl, divalent substituted alkynyl, divalent heteroalkynyl, divalent alkoxy, divalent lower alkoxy, divalent aryloxy, divalent alkylthio, divalent lower alkylthio, divalent arylthio, divalent aryl, divalent substituted aryl, divalent heteroaryl, divalent aralkyl, divalent aralkylene, divalent alkaryl, divalent alkarylene, divalent haloalkyl, divalent haloalkenyl, divalent haloalkynyl, divalent heteroalkyl, divalent heterocycle, divalent heteroaryl, a divalent heteroatom-containing group, divalent hydrocarbyl, divalent lower hydrocarbyl, divalent substituted hydrocarbyl, divalent heterohydrocarbyl, divalent silyl, divalent boryl, divalent phosphino, divalent phosphine, divalent amino, divalent amine, divalent ether, divalent thioether. R" is selected from alkyl, lower alkyl, substituted alkyl, heteroalkyl, alkenyl, lower alkenyl, substituted alkenyl, heteroalkenyl, alkynyl, lower alkynyl, substituted alkynyl, heteroalkynyl, alkoxy, lower alkoxy, aryloxy, alkylthio, lower alkylthio, arylthio, aryl, substituted aryl, heteroaryl, aralkyl, aralkylene, alkaryl, alkarylene, haloalkyl, haloalkenyl, haloalkynyl, heteroalkyl, heterocycle, heteroaryl, a heteroatom-containing group, hydrocarbyl, lower hydrocarbyl, substituted hydrocarbyl, heterohydrocarbyl, silyl, boryl, phosphino, phosphine, amino, amine, germanium, ether, and thioether.

In at least one embodiment, each of Cp^{A} and Cp^{B} is independently selected from cyclopentadienyl, n-propylcyclopentadienyl, indenyl, pentamethylcyclopentadienyl, tetramethylcyclopentadienyl, and n-butylcyclopentadienyl.

(A) may be O, S, NR', or SiR'₂, where each R' is independently hydrogen or C₁-C₂₀ hydrocarbyl.

In at least one embodiment Cp^{A}Cp^{B}M'X'ₙ is (n-propylcylcopentadienyl)₂HfMe₂, (1,3-methyl, butylcyclopentadienyl)ZrCl₂, (1,3-methyl, butylcyclopentadienyl)ZrCl₂, (1,3-methyl, butylcyclopentadienyl)ZrMe₂, Me₂Si(tetrahydroindenyl)ZrCl₂, Me₂Si(tetrahydroindenyl)ZrMe₂, Me₂Si(CpCH₂SiMe₃)2HfCl₂, Me₂Si(CpCH₂SiMe₃)₂HfMe₂.

In additional embodiments, the metallocene may have the structures (I): 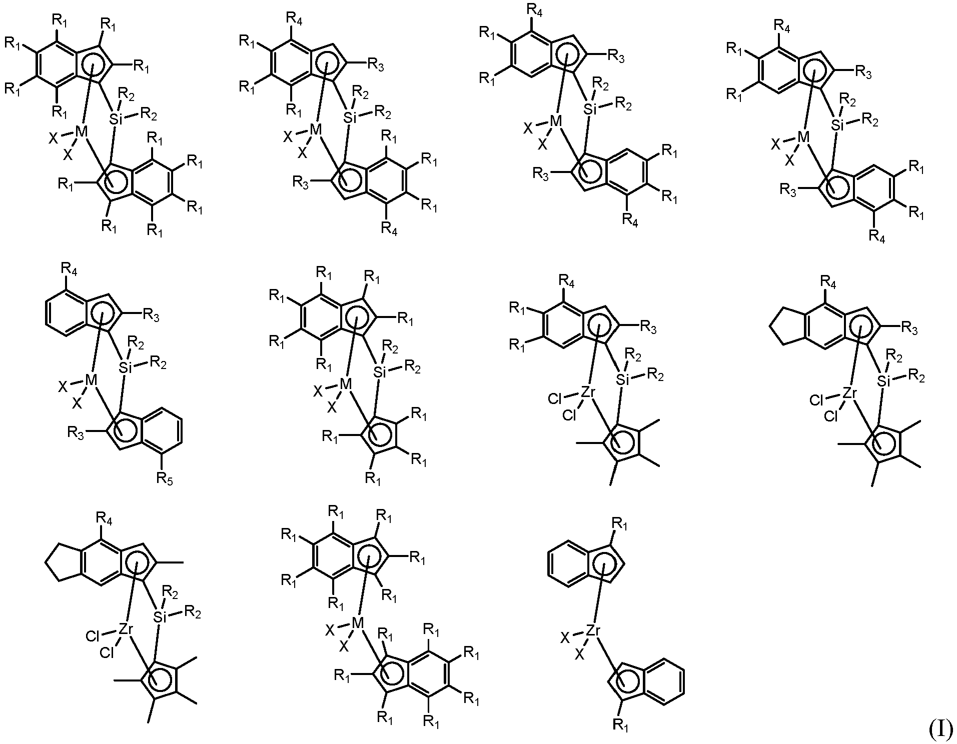 Where the metallocenes have substituted cyclopentadienyl rings, they may be comprised of racemic or meso geometries. R₁ is hydrogen, hydrocarbyl or substituted hydrocarbyl groups. R₁ may be the same or different. Two or more R₁ may join together to form a ring. R₂ is a hydrocarbyl or substituted hydrocarbyl group. Two R₂ may join together to form a ring. An R₁ and R₂ may also join together to form a ring. R₃ is an alkyl group. R₄ is an alkyl, substituted alkyl, aryl, or substituted aryl group. X is an anionic leaving group such as fluoride, chloride, alkoxide, methyl, allyl, benzyl, trimethylsilylmethyl. Two X may also be joined together such as in butadienyl type ligands.

In additional embodiments, the metallocene catalyst compounds are represented by (II):

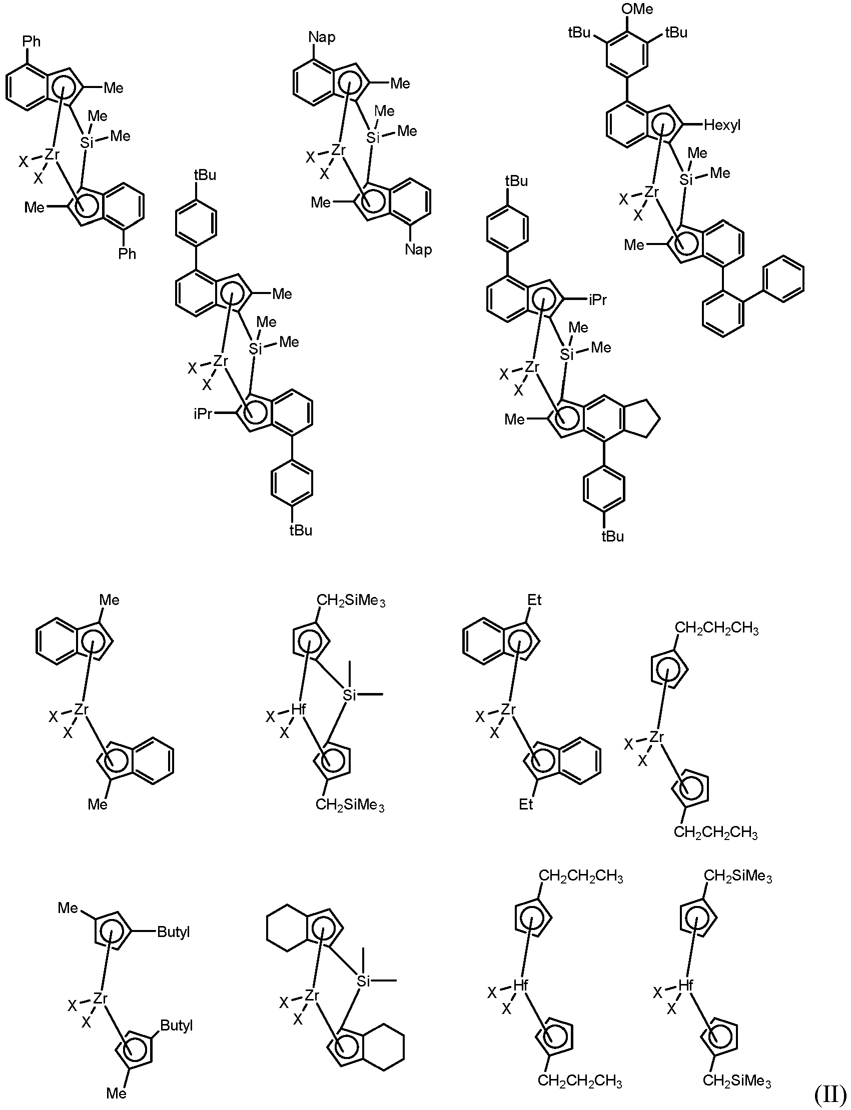

In additional embodiments, the metallocene catalyst compounds are represented by (III):

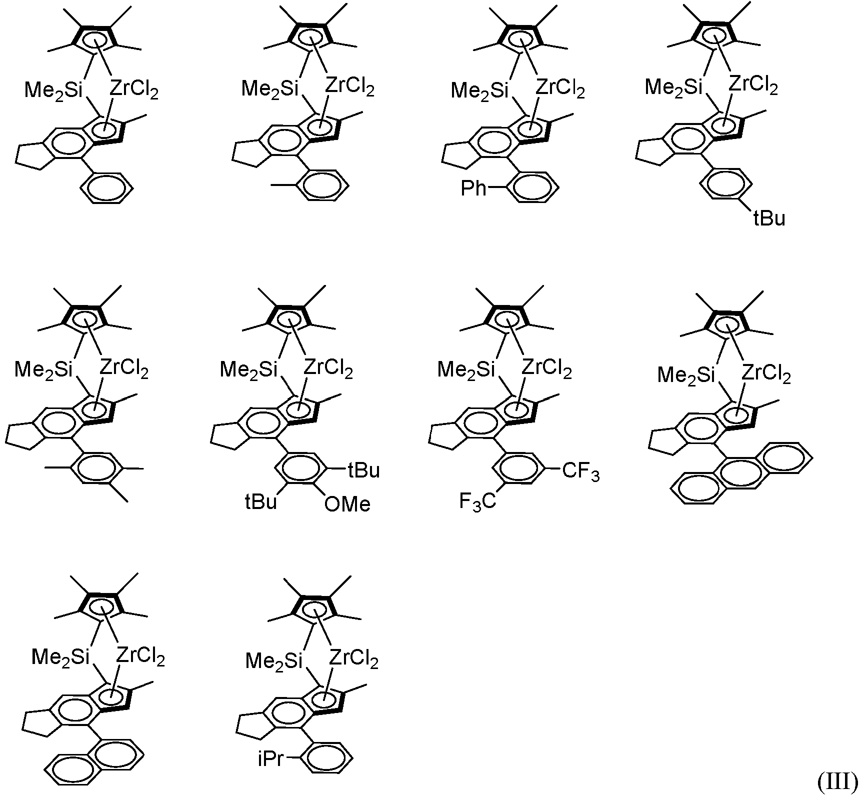

In another embodiment, the metallocene catalyst compound is represented by the formula:

T_{y}CpₘMGₙX_{q}

where Cp is independently a substituted or unsubstituted cyclopentadienyl ligand or substituted or unsubstituted ligand isolobal to cyclopentadienyl. M is a Group 4 transition metal. G is a heteroatom group represented by the formula JR*_{z} where J is N, P, O or S, and R* is a linear, branched, or cyclic C₁-C₂₀ hydrocarbyl. z is 1 or 2. T is a bridging group. y is 0 or 1. X is a leaving group. m=1, n= 1, 2 or 3, q=0, 1, 2 or 3, and the sum of m+n+q is equal to the oxidation state of the transition metal.

In at least one embodiment, J is N, and R* is methyl, ethyl, propyl, butyl, pentyl, hexyl, heptyl, octyl, nonyl, cyclooctyl, cyclododecyl, decyl, undecyl, dodecyl, adamantyl or an isomer thereof.

The metallocene catalyst compound may be selected from:
bis(1-methyl, 3-n-butyl cyclopentadienyl) zirconium dichloride;
dimethylsilyl bis(tetrahydroindenyl) zirconium dichloride;
bis(n-propylcyclopentadienyl) hafnium dimethyl;
dimethylsilyl (tetramethylcyclopentadienyl)(cyclododecylamido)titanium dimethyl;
dimethylsilyl (tetramethylcyclopentadienyl)(cyclododecylamido)titanium dichloride;
dimethylsilyl (tetramethylcyclopentadienyl)(t-butylamido)titanium dimethyl;
dimethylsilyl (tetramethylcyclopentadienyl)(t-butylamido)titanium dichloride;
µ-(CH₃)₂Si(cyclopentadienyl)(l-adamantylamido)M(R)₂;
µ-(CH₃)₂Si(3-tertbutylcyclopentadienyl)(1-adamantylamido)M(R)₂;
µ-(CH₃)₂(tetramethylcyclopentadienyl)(1-adamantylamido)M(R)₂;
µ-(CH₃)₂Si(tetramethylcyclopentadienyl)(1-adamantylamido)M(R)₂;
µ-(CH₃)₂C(tetramethylcyclopentadienyl)(1-adamantylamido)M(R)₂;
µ-(CH₃)₂Si(tetramethylcyclopentadienyl)(1-tertbutylamido)M(R)₂;
µ-(CH₃)₂Si(fluorenyl)(1-tertbutylamido)M(R)₂;
µ-(CH₃)₂Si(tetramethylcyclopentadienyl)(1-cyclododecylamido)M(R)₂;
µ-(C₆H₅)₂C(tetramethylcyclopentadienyl)(1-cyclododecylamido)M(R)₂;
µ-(CH₃)₂Si(*η*⁵-2,6,6-trimethyl-1,5,6,7-tetrahydro-*s*-indacen-1-yl)(tertbutylamido)M(R)₂; where M is selected from Ti, Zr, and Hf; and R is selected from halogen or C₁ to C₅ alkyl.

In further embodiments, the catalyst compounds are represented by (IV): 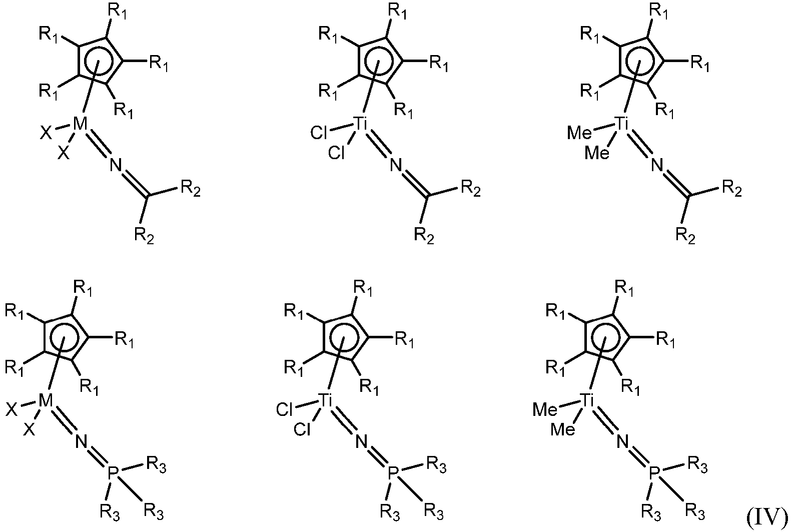 where R₁ is hydrogen, hydrocarbyl or substituted hydrocarbyl groups. R₁ may be the same or different. Two or more R₁ may join together to form a ring. R₂ and R₃ are a hydrocarbyl or substituted hydrocarbyl group. X is an anionic leaving group such as fluoride, chloride, alkoxide, methyl, allyl, benzyl, trimethylsilylmethyl. Two X may also be joined together such as in butadienyl type ligands.

In at least one embodiment, the catalyst compound is a bis(phenolate) catalyst compound represented by Formula (**V**): 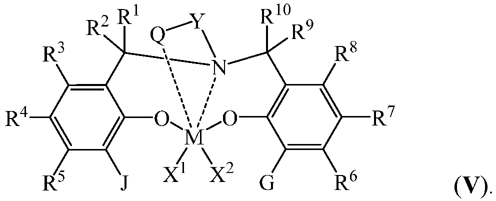 M is a Group 4 metal. X¹ and X² are independently a univalent C₁-C₂₀ hydrocarbyl, C₁-C₂₀ substituted hydrocarbyl, a heteroatom or a heteroatom-containing group, or X¹ and X² join together to form a C₄-C₆₂ cyclic or polycyclic ring structure. R¹, R², R³, R⁴, R⁵, R⁶, R⁷, R⁸, R⁹, and R¹⁰ is independently hydrogen, C₁-C₄₀ hydrocarbyl, C₁-C₄₀ substituted hydrocarbyl, a heteroatom or a heteroatom-containing group, or two or more of R¹, R², R³, R⁴, R⁵, R⁶, R⁷, R⁸, R⁹, or R¹⁰ are joined together to form a C₄-C₆₂ cyclic or polycyclic ring structure, or a combination thereof. Q is a neutral donor group. J is heterocycle, a substituted or unsubstituted C₇-C₆₀ fused polycyclic group, where at least one ring is aromatic and where at least one ring, which may or may not be aromatic, has at least five ring atoms. G is as defined for J or may be hydrogen, C₂-C₆₀ hydrocarbyl, C₁-C₆₀ substituted hydrocarbyl, or may independently form a C₄-C₆₀ cyclic or polycyclic ring structure with R⁶, R⁷, or R⁸ or a combination thereof. Y is divalent C₁-C₂₀ hydrocarbyl or divalent C₁-C₂₀ substituted hydrocarbyl or (-Q*-Y-) together form a heterocycle. Heterocycle may be aromatic and/or may have multiple fused rings.

In at least one embodiment, the catalyst compound represented by Formula (**V**) is represented by Formula (**VI**) or Formula (**VII**): 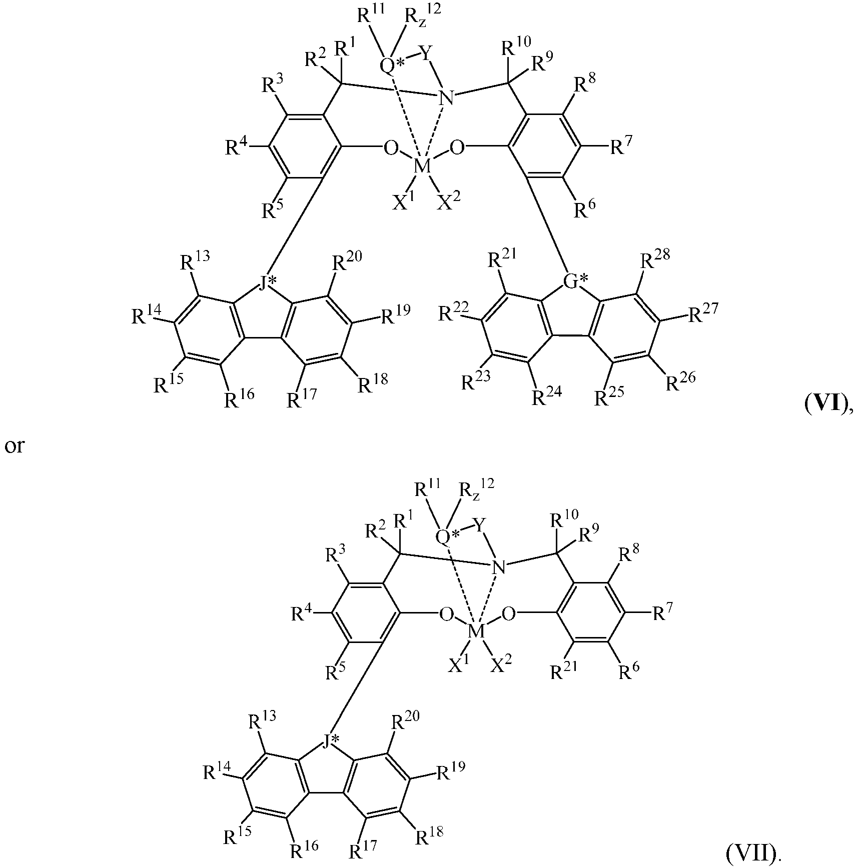 M is Hf, Zr, or Ti. X¹, X² , R¹, R², R³, R⁴, R⁵, R⁶, R⁷, R⁸, R⁹, R¹⁰, and Y are as defined for Formula (V). R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, and R²⁸ is independently a hydrogen, C₁-C₄₀ hydrocarbyl, C₁-C₄₀ substituted hydrocarbyl, a functional group comprising elements from Groups 13 to 17, or two or more of R¹, R², R³, R⁴, R⁵*,* R⁶, R⁷, R⁸, R⁹, R¹⁰ R¹¹, R¹², R¹³, R¹⁴, R¹⁵, R¹⁶, R¹⁷, R¹⁸, R¹⁹, R²⁰, R²¹, R²², R²³, R²⁴, R²⁵, R²⁶, R²⁷, and R²⁸ may independently join together to form a C₄-C₆₂ cyclic or polycyclic ring structure, or a combination thereof. R¹¹ and R¹² may join together to form a five- to eight-membered heterocycle. Q* is a group 15 or 16 atom. z is 0 or 1. J* is CR" or N, and G* is CR" or N, where R" is C₁-C₂₀ hydrocarbyl or carbonyl-containing C₁-C₂₀ hydrocarbyl. z = 0 if Q* is a group 16 atom, and z = 1 if Q* is a group 15 atom.

In at least one embodiment the catalyst is an iron complex represented by Formula (**VIII**): 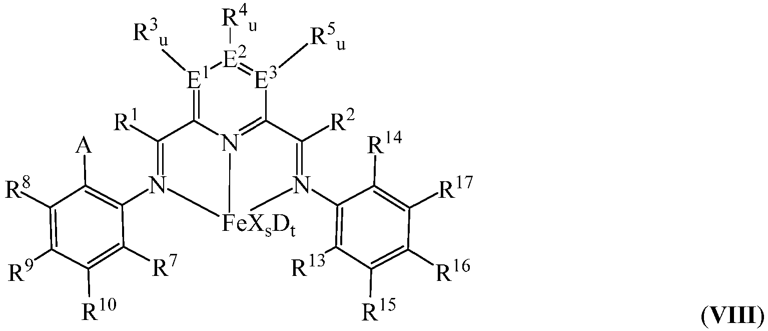 wherein:
A is chlorine, bromine, iodine, -CF₃ or -OR¹¹,
each of R¹ and R² is independently hydrogen, C₁-C₂₂-alkyl, C₂-C₂₂-alkenyl, C₆-C₂₂-aryl, arylalkyl where alkyl has from 1 to 10 carbon atoms and aryl has from 6 to 20 carbon atoms, or five-, six- or seven-membered heterocyclyl comprising at least one atom selected from the group consisting of N, P, O and S;
wherein each of R¹ and R² is optionally substituted by halogen, -NR¹¹₂, -OR¹¹ or -SiR¹²₃;
wherein R¹ optionally bonds with R³, and R² optionally bonds with R⁵, in each case to independently form a five-, six- or seven-membered ring;
R⁷ is a C₁-C₂₀ alkyl;
each of R³, R⁴, R⁵, R⁸, R⁹, R¹⁰, R¹⁵, R¹⁶, and R¹⁷ is independently hydrogen, C₁-C₂₂-alkyl, C₂-C₂₂-alkenyl, C₆-C₂₂-aryl, arylalkyl where alkyl has from 1 to 10 carbon atoms and aryl has from 6 to 20 carbon atoms, -NR¹¹₂, -OR¹¹, halogen, -SiR¹²₃ or five-, six- or seven-membered heterocyclyl comprising at least one atom selected from the group consisting of N, P, O and S;
wherein R³, R⁴, R⁵, R⁷, R⁸, R⁹, R¹⁰, R¹⁵, R¹⁶, and R¹⁷ are optionally substituted by halogen, -NR¹¹₂, -OR¹¹ or -SiR¹²₃;
wherein R³ optionally bonds with R⁴, R⁴ optionally bonds with R⁵, R⁷ optionally bonds with R¹⁰, R¹⁰ optionally bonds with R⁹, R⁹ optionally bonds with R⁸, R¹⁷ optionally bonds with R¹⁶, and R¹⁶ optionally bonds with R¹⁵, in each case to independently form a five-, six- or seven-membered carbocyclic or heterocyclic ring, the heterocyclic ring comprising at least one atom from the group consisting of N, P, O and S;
R¹³ is C₁-C₂₀-alkyl bonded with the aryl ring via a primary or secondary carbon atom,
R¹⁴ is chlorine, bromine, iodine, -CF₃ or -OR¹¹, or C₁-C₂₀-alkyl bonded with the aryl ring;
each R¹¹ is independently hydrogen, C₁-C₂₂-alkyl, C₂-C₂₂-alkenyl, C₆-C₂₂-aryl, arylalkyl where alkyl has from 1 to 10 carbon atoms and aryl has from 6 to 20 carbon atoms, or -SiR¹²₃, wherein R¹¹ is optionally substituted by halogen, or two R¹¹ radicals optionally bond to form a five- or six-membered ring;
each R¹² is independently hydrogen, C₁-C₂₂-alkyl, C₂-C₂₂-alkenyl, C₆-C₂₂-aryl, arylalkyl where alkyl has from 1 to 10 carbon atoms and aryl has from 6 to 20 carbon atoms, or two R¹² radicals optionally bond to form a five- or six-membered ring,
each of E¹, E², and E³ is independently carbon, nitrogen or phosphorus;
each u is independently 0 if E¹, E², and E³ is nitrogen or phosphorus and is 1 if E¹, E², and E³ is carbon,
each X is independently fluorine, chlorine, bromine, iodine, hydrogen, C₁-C₂₀-alkyl, C₂-C₁₀-alkenyl, C₆-C₂₀-aryl, arylalkyl where alkyl has from 1 to 10 carbon atoms and aryl has from 6 to 20 carbon atoms, -NR¹⁸₂, -OR¹⁸, -SR¹⁸, -SO₃R¹⁸, -OC(O)R¹⁸, -CN, -SCN, β-diketonate, -CO, -BF₄⁻, -PF₆⁻ or bulky non-coordinating anions, and the radicals X can be bonded with one another;
each R¹⁸ is independently hydrogen, C₁-C₂₀-alkyl, C₂-C₂₀-alkenyl, C₆-C₂₀-aryl, arylalkyl where alkyl has from 1 to 10 carbon atoms and aryl has from 6 to 20 carbon atoms, or -SiR¹⁹₃, wherein R¹⁸ can be substituted by halogen or nitrogen- or oxygen-containing groups and two R¹⁸ radicals optionally bond to form a five- or six-membered ring;
each R¹⁹ is independently hydrogen, C₁-C₂₀-alkyl, C₂-C₂₀-alkenyl, C₆-C₂₀-aryl or arylalkyl where alkyl has from 1 to 10 carbon atoms and aryl has from 6 to 20 carbon atoms, wherein R¹⁹ can be substituted by halogen or nitrogen- or oxygen-containing groups or two R¹⁹ radicals optionally bond to form a five- or six-membered ring;
s is 1, 2, or 3,
D is a neutral donor, and
t is 0 to 2.

In at least one embodiment, the catalyst is a quinolinyldiamido transition metal complex represented by Formulas (**IX**) and (**X**): 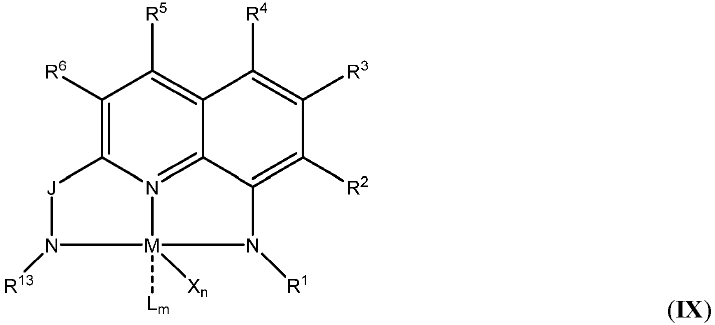 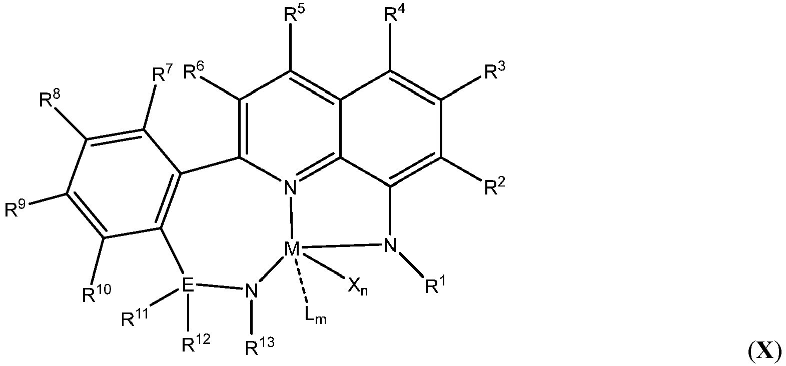 wherein:
M is a Group 3-12 metal;
J is a three-atom-length bridge between the quinoline and the amido nitrogen;
E is selected from carbon, silicon, or germanium;
X is an anionic leaving group;
L is a neutral Lewis base;
R¹ and R¹³ are independently selected from the group consisting of hydrocarbyls, substituted hydrocarbyls, and silyl groups;
R² through R¹² are independently selected from the group consisting of hydrogen, hydrocarbyls, alkoxy, silyl, amino, aryloxy, substituted hydrocarbyls, halogen, and phosphino;
n is 1 or 2;
m is 0, 1, or 2
n+m is not greater than 4; and
any two adjacent R groups (e.g. R¹ & R², R² & R³, etc.) may be joined to form a substituted or unsubstituted hydrocarbyl or heterocyclic ring, where the ring has 5, 6, 7, or 8 ring atoms and where substitutions on the ring can join to form additional rings;
any two X groups may be joined together to form a dianionic group;
any two L groups may be joined together to form a bidentate Lewis base;
an X group may be joined to an L group to form a monoanionic bidentate group.

In a preferred embodiment M is a Group 4 metal, zirconium or hafnium;

In a preferred embodiment J is an arylmethyl, dihydro-1H-indenyl, or tetrahydronaphthalenyl group;

In a preferred embodiment E is carbon;

In a preferred embodiment X is alkyl, aryl, hydride, alkylsilane, fluoride, chloride, bromide, iodide, triflate, carboxylate, or alkylsulfonate;

In a preferred embodiment L is an ether, amine or thioether;

In a preferred embodiment, R⁷ and R⁸ are joined to form a six membered aromatic ring with the joined R⁷ and R⁸ group being -CH=CHCH=CH-;

In a preferred embodiment R¹⁰ and R¹¹ are joined to form a five membered ring with the joined R¹⁰ and R¹¹ groups being -CH₂CH₂-;

In a preferred embodment R¹⁰ and R¹¹ are joined to form a six membered ring with the joined R¹⁰ and R¹¹ groups being -CH₂CH₂CH₂-;

In a preferred embodiment, R¹ and R¹³ may be independently selected from phenyl groups that are variously substituted with between zero to five substituents that include F, Cl, Br, I, CF₃, NO₂, alkoxy, dialkylamino, aryl, and alkyl groups having 1 to 10 carbons, such as methyl, ethyl, propyl, butyl, pentyl, hexyl, heptyl, octyl, nonyl, decyl, and isomers thereof.

In another embodiment, the catalyst is a phenoxyimine compound represented by the Formula (**XI**): 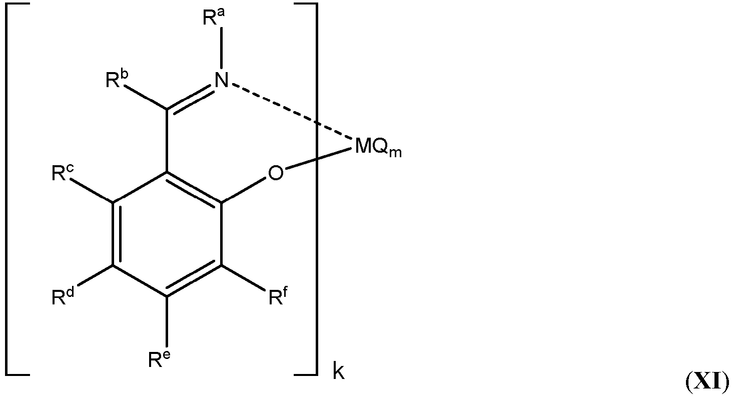 wherein M represents a transition metal atom selected from the groups 3 to 11 metals in the periodic table; k is an integer of 1 to 6; m is an integer of 1 to 6; R^{a} to R^{f} may be the same or different from one another and each represent a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group or a tin-containing group, among which 2 or more groups may be bound to each other to form a ring; when k is 2 or more, R^{a} groups, R^{b} groups, R^{c} groups, R^{d} groups, R^{e} groups, or R^{f} groups may be the same or different from one another, one group of R^{a} to R^{f} contained in one ligand and one group of R^{a} to R^{f} contained in another ligand may form a linking group or a single bond, and a heteroatom contained in R^{a} to R^{f} may coordinate with or bind to M; m is a number satisfying the valence of M; Q represents a hydrogen atom, a halogen atom, an oxygen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group; when m is 2 or more, a plurality of groups represented by Q may be the same or different from one another, and a plurality of groups represented by Q may be mutually bound to form a ring.

In another embodiment, the catalyst is a bis(imino)pyridyl of the Formula (**XII**): 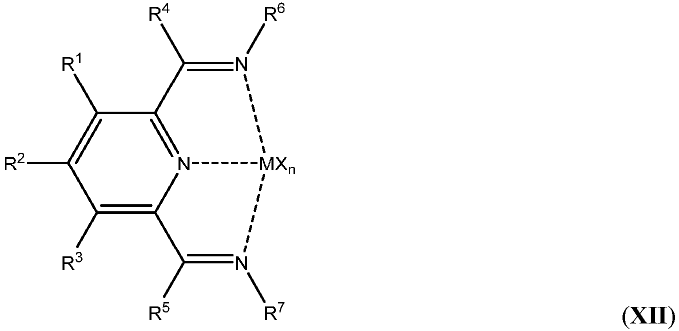 wherein :
M is Co or Fe; each X is an anion; n is 1, 2 or 3, so that the total number of negative charges on said anion or anions is equal to the oxidation state of a Fe or Co atom present in (**XII**);
R¹, R² and R³ are each independently hydrogen, hydrocarbyl, substituted hydrocarbyl, or an inert functional group;
R⁴ and R⁵ are each independently hydrogen, hydrocarbyl, an inert functional group or substituted hydrocarbyl;
R⁶ is formula (**XIII**): 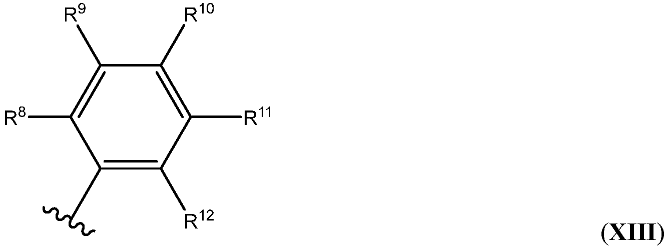
and R⁷ is Formula (**XIV**): 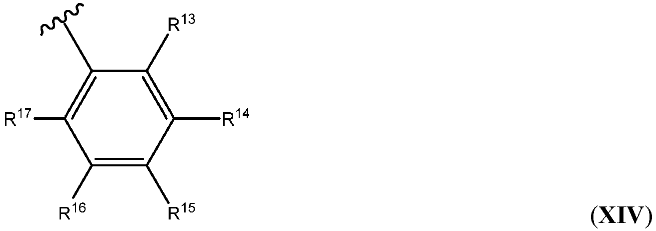
R⁸ and R¹³ are each independently hydrocarbyl, substituted hydrocarbyl or an inert functional group;
R⁹, R¹⁰, R¹¹, R¹⁴, R¹⁵ and R¹⁶ are each independently hydrogen, hydrocarbyl, substituted hydrocarbyl or an inert functional group;
R¹² and R¹⁷ are each independently hydrogen, hydrocarbyl, substituted hydrocarbyl or an inert functional group;
and provided that any two of R⁸, R⁹, R¹⁰, R¹¹, R¹², R¹³, R¹⁴, R¹⁵ , R¹⁶ and R¹⁷ that are adjacent to one another, together may form a ring.

In at least one embodiment, the catalyst compound is represented by the Formula (**XV**): 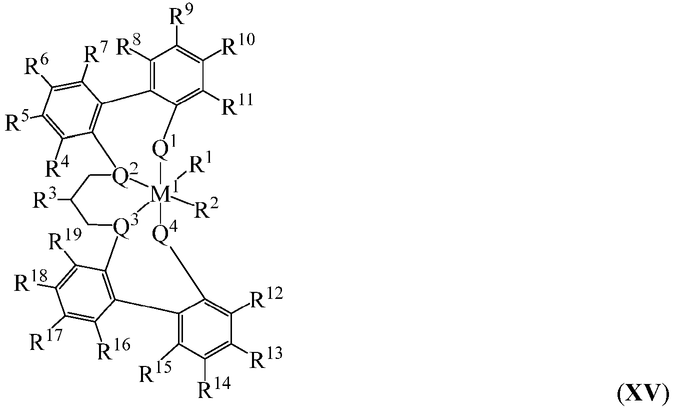 M¹ is selected from the group consisting of titanium, zirconium, hafnium, vanadium, niobium, tantalum, chromium, molybdenum and tungsten. In at least one embodiment, M¹ is zirconium.

Each of Q¹, Q², Q³, and Q⁴ is independently oxygen or sulfur. In at least one embodiment, at least one of Q¹, Q², Q³, and Q⁴ is oxygen, alternately all of Q¹, Q², Q³, and Q⁴ are oxygen.

R¹ and R² are independently hydrogen, halogen, hydroxyl, hydrocarbyl, or substituted hydrocarbyl (such as C₁-C₁₀ alkyl, C₁-C₁₀ alkoxy, C₆-C₂₀ aryl, C₆-C₁₀ aryloxy, C₂-C₁₀ alkenyl, C₂-C₄₀ alkenyl, C₇-C₄₀ arylalkyl, C₇-C₄₀ alkylaryl, C₈-C₄₀ arylalkenyl, or conjugated diene which is optionally substituted with one or more hydrocarbyl, tri(hydrocarbyl) silyl or tri(hydrocarbyl) silylhydrocarbyl, the diene having up to 30 atoms other than hydrogen). R¹ and R² can be a halogen selected from fluorine, chlorine, bromine, or iodine. Preferably, R¹ and R² are chlorine.

Alternatively, R¹ and R² may also be joined together to form an alkanediyl group or a conjugated C₄-C₄₀ diene ligand which is coordinated to M¹. R¹ and R² may also be identical or different conjugated dienes, optionally substituted with one or more hydrocarbyl, tri(hydrocarbyl) silyl or tri(hydrocarbyl) silylhydrocarbyl, the dienes having up to 30 atoms not counting hydrogen and/or forming a π-complex with M¹.

Exemplary groups suitable for R¹ and or R² can include 1,4-diphenyl, 1,3-butadiene, 1,3-pentadiene, 2-methyl 1,3-pentadiene, 2,4-hexadiene, 1-phenyl, 1,3-pentadiene, 1,4-dibenzyl, 1,3-butadiene, 1,4-ditolyl-1,3-butadiene, 1,4-bis (trimethylsilyl)-1,3-butadiene, and 1,4-dinaphthyl-1,3-butadiene. R¹ and R² can be identical and are C₁-C₃ alkyl or alkoxy, C₆-C₁₀ aryl or aryloxy, C₂-C₄ alkenyl, C₇-C₁₀ arylalkyl, C₇-C₁₂ alkylaryl, or halogen.

Each of R⁴, R⁵, R⁶, R⁷, R⁸, R⁹, R¹⁰, R¹¹, R¹², R¹³, R¹⁴, R¹⁵, R¹⁶, R¹⁷, R¹⁸, and R¹⁹ is independently hydrogen, halogen, C₁-C₄₀ hydrocarbyl or C₁-C₄₀ substituted hydrocarbyl (such as C₁-C₁₀ alkyl, C₁-C₁₀ alkoxy, C₆-C₂₀ aryl, C₆-C₁₀ aryloxy, C₂-C₁₀ alkenyl, C₂-C₄₀ alkenyl, C₇-C₄₀ arylalkyl, C₇-C₄₀ alkylaryl, C₈-C₄₀ arylalkenyl, or conjugated diene which is optionally substituted with one or more hydrocarbyl, tri(hydrocarbyl) silyl or tri(hydrocarbyl) silylhydrocarbyl, the diene having up to 30 atoms other than hydrogen), -NR'₂, -SR', -OR, -OSiR'₃, -PR'₂, where each R' is hydrogen, halogen, C₁-C₁₀ alkyl, or C₆-C₁₀ aryl, or one or more of R⁴ and R⁵*,* R⁵ and R⁶, R⁶ and R⁷, R⁸ and R⁹, R⁹ and R¹⁰, R¹⁰ and R¹¹, R¹² and R¹³, R¹³ and R¹⁴, R¹⁴ and R¹⁵, R¹⁶ and R¹⁷, R¹⁷ and R¹⁸, and R¹⁸ and R¹⁹ are joined to form a saturated ring, unsaturated ring, substituted saturated ring, or substituted unsaturated ring. In at least one embodiment, C₁-C₄₀ hydrocarbyl is selected from methyl, ethyl, propyl, n-propyl, isopropyl, n-butyl, isobutyl, sec-butyl, n-pentyl, isopentyl, sec-pentyl, n-hexyl, isohexyl, sec-hexyl, n-heptyl, isoheptyl, sec-heptyl, n-octyl, isooctyl, sec-octyl, n-nonyl, isononyl, sec-nonyl, n-decyl, isodecyl, and sec-decyl. Preferably, R¹¹ and R¹² are C₆-C₁₀ aryl such as phenyl or naphthyl optionally substituted with C₁-C₄₀ hydrocarbyl, such as C₁-C₁₀ hydrocarbyl. Preferably, R⁶ and R¹⁷ are C₁₋₄₀ alkyl, such as C₁-C₁₀ alkyl.

In at least one embodiment, each of R⁴, R⁵, R⁶, R⁷, R⁸, R⁹, R¹⁰, R¹³, R¹⁴, R¹⁵, R¹⁶, R¹⁷, R¹⁸, and R¹⁹ is independently hydrogen or C₁-C₄₀ hydrocarbyl. In at least one embodiment, C₁-C₄₀ hydrocarbyl is selected from methyl, ethyl, propyl, n-propyl, isopropyl, n-butyl, isobutyl, sec-butyl, n-pentyl, isopentyl, sec-pentyl, n-hexyl, isohexyl, sec-hexyl, n-heptyl, isoheptyl, sec-heptyl, n-octyl, isooctyl, sec-octyl, n-nonyl, isononyl, sec-nonyl, n-decyl, isodecyl, and sec-decyl. Preferably, each of R⁶ and R¹⁷ is C₁-C₄₀ hydrocarbyl and R⁴, R⁵, R⁷, R⁸, R⁹, R¹⁰, R¹³, R¹⁴, R¹⁵, R¹⁶, R¹⁸, and R¹⁹ is hydrogen. In at least one embodiment, C₁-C₄₀ hydrocarbyl is selected from methyl, ethyl, propyl, n-propyl, isopropyl, n-butyl, isobutyl, sec-butyl, n-pentyl, isopentyl, sec-pentyl, n-hexyl, isohexyl, sec-hexyl, n-heptyl, isoheptyl, sec-heptyl, n-octyl, isooctyl, sec-octyl, n-nonyl, isononyl, sec-nonyl, n-decyl, isodecyl, and sec-decyl.

R³ is a C₁-C₄₀ unsaturated alkyl or substituted C₁-C₄₀ unsaturated alkyl (such as C₁-C₁₀ alkyl, C₁-C₁₀ alkoxy, C₆-C₂₀ aryl, C₆-C₁₀ aryloxy, C₂-C₁₀ alkenyl, C₂-C₄₀ alkenyl, C₇-C₄₀ arylalkyl, C₇-C₄₀ alkylaryl, C₈-C₄₀ arylalkenyl, or conjugated diene which is optionally substituted with one or more hydrocarbyl, tri(hydrocarbyl) silyl or tri(hydrocarbyl) silylhydrocarbyl, the diene having up to 30 atoms other than hydrogen).

Preferably, R³ is a hydrocarbyl comprising a vinyl moiety. As used herein, "vinyl" and "vinyl moiety" are used interchangeably and include a terminal alkene, e.g. represented by the structure 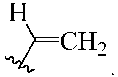 Hydrocarbyl of R³ may be further substituted (such as C₁-C₁₀ alkyl, C₁-C₁₀ alkoxy, C₆-C₂₀ aryl, C₆-C₁₀ aryloxy, C₂-C₁₀ alkenyl, C₂-C₄₀ alkenyl, C₇-C₄₀ arylalkyl, C₇-C₄₀ alkylaryl, C₈-C₄₀ arylalkenyl, or conjugated diene which is optionally substituted with one or more hydrocarbyl, tri(hydrocarbyl) silyl or tri(hydrocarbyl) silylhydrocarbyl, the diene having up to 30 atoms other than hydrogen). Preferably, R³ is C₁-C₄₀ unsaturated alkyl that is vinyl or substituted C₁-C₄₀ unsaturated alkyl that is vinyl. R³ can be represented by the structure -R'CH=CH₂ where R' is C₁-C₄₀ hydrocarbyl or C₁-C₄₀ substituted hydrocarbyl (such as C₁-C₁₀ alkyl, C₁-C₁₀ alkoxy, C₆-C₂₀ aryl, C₆-C₁₀ aryloxy, C₂-C₁₀ alkenyl, C₂-C₄₀ alkenyl, C₇-C₄₀ arylalkyl, C₇-C₄₀ alkylaryl, C₈-C₄₀ arylalkenyl, or conjugated diene which is optionally substituted with one or more hydrocarbyl, tri(hydrocarbyl) silyl or tri(hydrocarbyl) silylhydrocarbyl, the diene having up to 30 atoms other than hydrogen). In at least one embodiment, C₁-C₄₀ hydrocarbyl is selected from methyl, ethyl, propyl, n-propyl, isopropyl, n-butyl, isobutyl, sec-butyl, n-pentyl, isopentyl, sec-pentyl, n-hexyl, isohexyl, sec-hexyl, n-heptyl, isoheptyl, sec-heptyl, n-octyl, isooctyl, sec-octyl, n-nonyl, isononyl, sec-nonyl, n-decyl, isodecyl, and sec-decyl.

In at least one embodiment, R³ is 1-propenyl, 1-butenyl, 1-pentenyl, 1-hexenyl, 1-heptenyl, 1-octenyl, 1-nonenyl, or 1-decenyl.

In at least one embodiment, the catalyst is a Group 15-containing metal compound represented by Formulas (**XVI**) or (**XVII**): 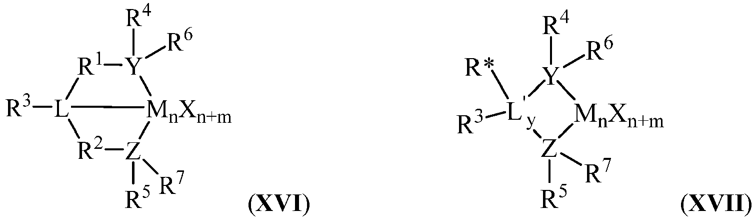 wherein M is a Group 3 to 12 transition metal or a Group 13 or 14 main group metal, a Group 4, 5, or 6 metal. In many embodiments, M is a Group 4 metal, such as zirconium, titanium, or hafnium. Each X is independently a leaving group, such as an anionic leaving group. The leaving group may include a hydrogen, a hydrocarbyl group, a heteroatom, a halogen, or an alkyl; y is 0 or 1 (when y is 0 group L' is absent). The term 'n' is the oxidation state of M. In various embodiments, n is +3, +4, or +5. In many embodiments, n is +4. The term 'm' represents the formal charge of the YZL or the YZL' ligand, and is 0, -1, -2 or -3 in various embodiments. In many embodiments, m is -2. L is a Group 15 or 16 element, such as nitrogen or oxygen; L' is a Group 15 or 16 element or Group 14 containing group, such as carbon, silicon or germanium. Y is a Group 15 element, such as nitrogen or phosphorus. In many embodiments, Y is nitrogen. Z is a Group 15 element, such as nitrogen or phosphorus. In many embodiments, Z is nitrogen. R¹ and R² are, independently, a C₁ to C₂₀ hydrocarbon group, a heteroatom containing group having up to twenty carbon atoms, silicon, germanium, tin, lead, or phosphorus. In many embodiments, R¹ and R² are a C₂ to C₂₀ alkyl, aryl or aralkyl group, such as a C₂ to C₂₀ linear, branched or cyclic alkyl group, or a C₂ to C₂₀ hydrocarbon group. R¹ and R² may also be interconnected to each other. R³ may be absent or may be a hydrocarbon group, a hydrogen, a halogen, a heteroatom containing group. In many embodiments, R³ is absent, for example, if L is an oxygen, or a hydrogen, or a linear, cyclic, or branched alkyl group having 1 to 20 carbon atoms. R⁴ and R⁵ are independently an alkyl group, an aryl group, substituted aryl group, a cyclic alkyl group, a substituted cyclic alkyl group, a cyclic aralkyl group, a substituted cyclic aralkyl group, or multiple ring system, often having up to 20 carbon atoms. In many embodiments, R⁴ and R⁵ have between 3 and 10 carbon atoms, or are a C₁ to C₂₀ hydrocarbon group, a C₁ to C₂₀ aryl group or a C₁ to C₂₀ aralkyl group, or a heteroatom containing group. R⁴ and R⁵ may be interconnected to each other. R⁶ and R⁷ are independently absent, hydrogen, an alkyl group, halogen, heteroatom, or a hydrocarbyl group, such as a linear, cyclic or branched alkyl group having 1 to 20 carbon atoms. In many embodiments, R⁶ and R⁷ are absent. R* may be absent, or may be a hydrogen, a Group 14 atom containing group, a halogen, or a heteroatom containing group.

By "formal charge of the YZL or YZL' ligand," it is meant the charge of the entire ligand absent the metal and the leaving groups X. By "R¹ and R² may also be interconnected" it is meant that R¹ and R² may be directly bound to each other or may be bound to each other through other groups. By "R⁴ and R⁵ may also be interconnected" it is meant that R⁴ and R⁵ may be directly bound to each other or may be bound to each other through other groups. An alkyl group may be linear, branched alkyl radicals, alkenyl radicals, alkynyl radicals, cycloalkyl radicals, aryl radicals, acyl radicals, aroyl radicals, alkoxy radicals, aryloxy radicals, alkylthio radicals, dialkylamino radicals, alkoxycarbonyl radicals, aryloxycarbonyl radicals, carbomoyl radicals, alkyl- or dialkyl- carbamoyl radicals, acyloxy radicals, acylamino radicals, aroylamino radicals, straight, branched or cyclic, alkylene radicals, or combination thereof. An aralkyl group is defined to be a substituted aryl group.

In one or more embodiments, R⁴ and R⁵ are independently a group represented by structure (**XVIII**): 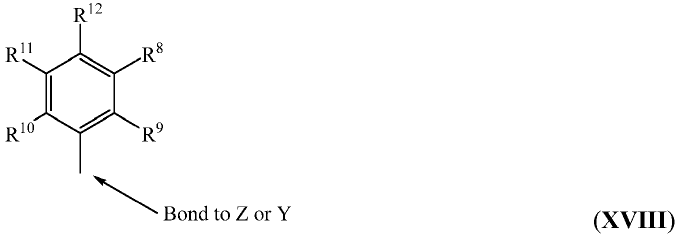 wherein R⁸ to R¹² are each independently hydrogen, a C₁ to C₄₀ alkyl group, a halide, a heteroatom, a heteroatom containing group containing up to 40 carbon atoms. In many embodiments, R⁸ to R¹² are a C₁ to C₂₀ linear or branched alkyl group, such as a methyl, ethyl, propyl, or butyl group. Any two of the R groups may form a cyclic group and/or a heterocyclic group. The cyclic groups may be aromatic. In one embodiment R⁹, R¹⁰ and R¹² are independently a methyl, ethyl, propyl, or butyl group (including all isomers). In another embodiment, R⁹, R¹⁰ and R¹² are methyl groups, and R⁸ and R¹¹ are hydrogen.

In one or more embodiments, R⁴ and R⁵ are both a group represented by structure (**XIX**): 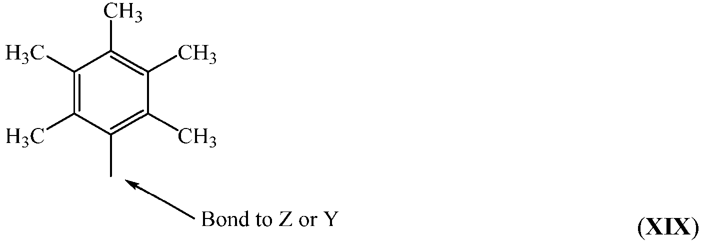 wherein M is a Group 4 metal, such as zirconium, titanium, or hafnium. In at least one embodiment, M is zirconium. Each of L, Y, and Z may be a nitrogen. Each of R¹ and R² may be -CH₂-CH₂-. R³ may be hydrogen, and R⁶ and R⁷ may be absent.

In certain embodiments, the catalyst may be represented by one of the following formulae: 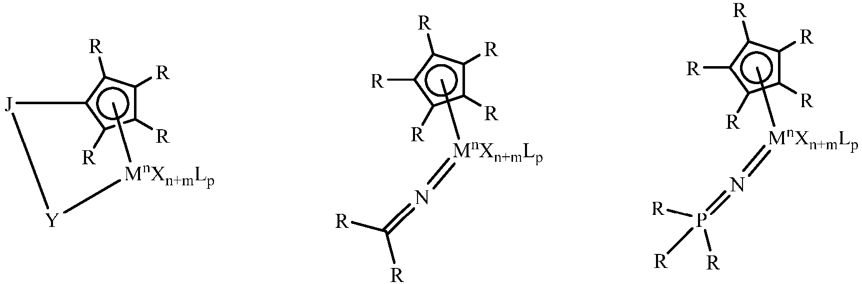 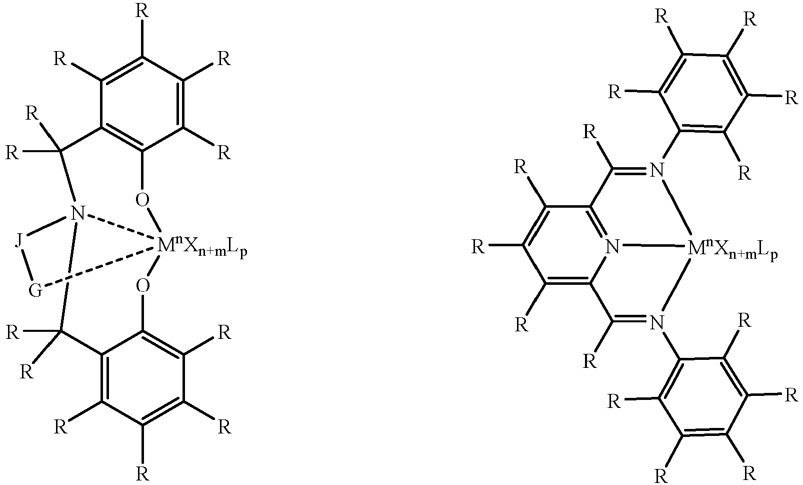 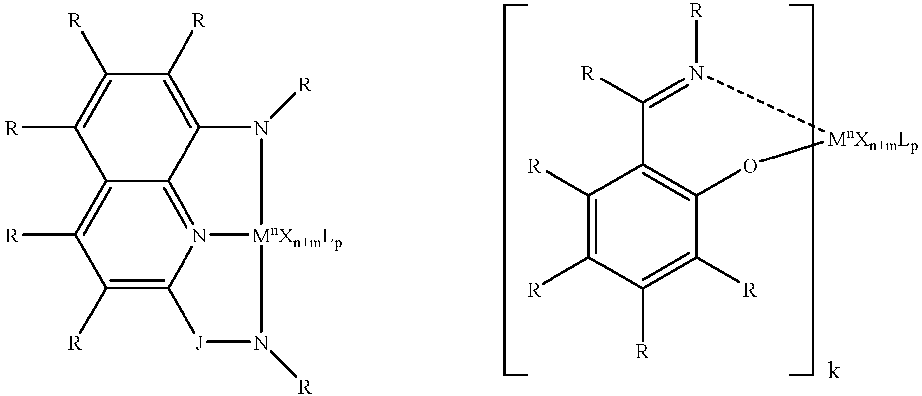 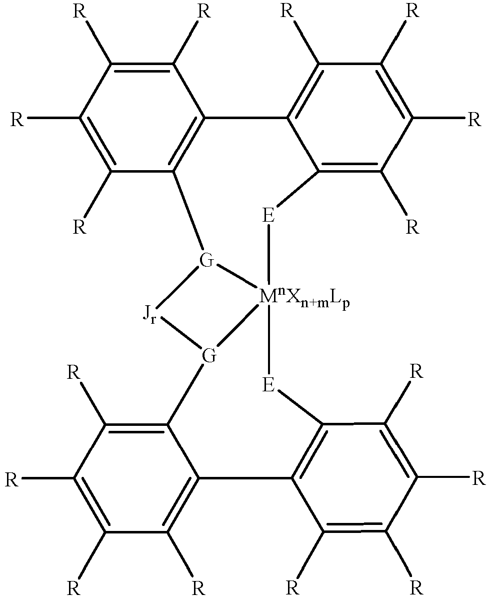 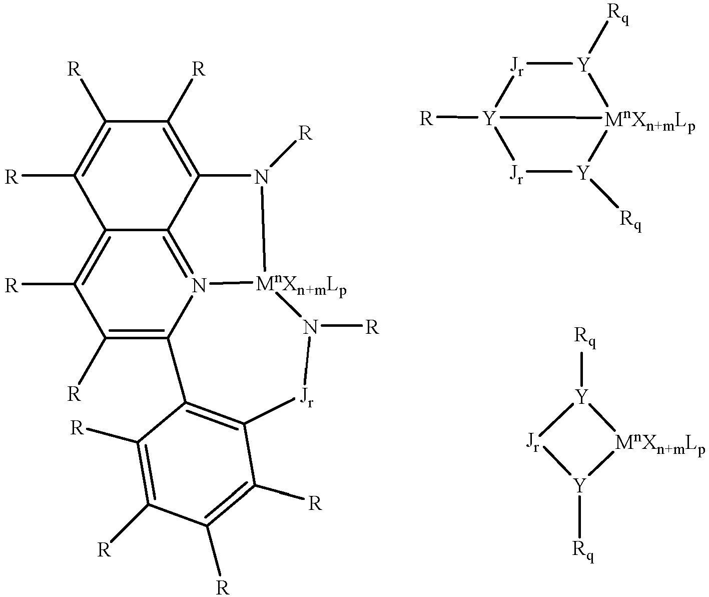 where R is independently H, hydrocarbyl, substituted hydrocarbyl, a halide, a substituted heteroatom group or SiR₃; R may be combined together to form a ring; when there is an aromatic ring present, any one or more of the ring C-R may be substituted to form a heterocyclic ring; G is a neutral Lewis Base derived from substituted OR, SR, NR₂, or PR₂ groups; E is O, S, NR, or PR; Y is either G or E; J is independently a formal diradical O, S, NR, PR, CR₂, SiR₂; L is a formally neutral ligand or Lewis acid; X is a halide, hydride, hydrocarbyl or a labile anionic group capable of conversion into a metal hydrocarbyl group; M is a group 3-12 metal; n is the formal oxidation state of the metal between 0 and 6; m is the sum of the formal anionic charges on the non-X ligands, between -1 and -6; p = 0 to 4; r = 1 to 20; k = 1 to 4.

In certain aspects, the catalyst compound comprises one or more of the following metallocenes or their isomers: 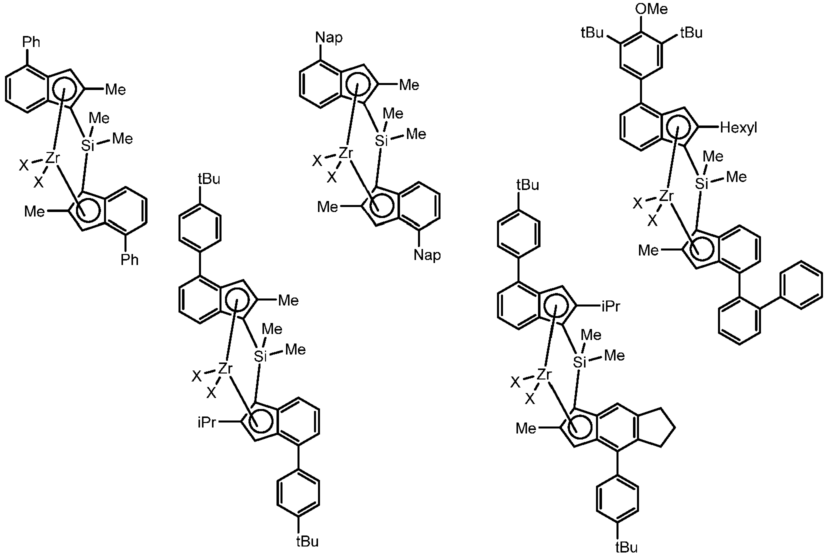 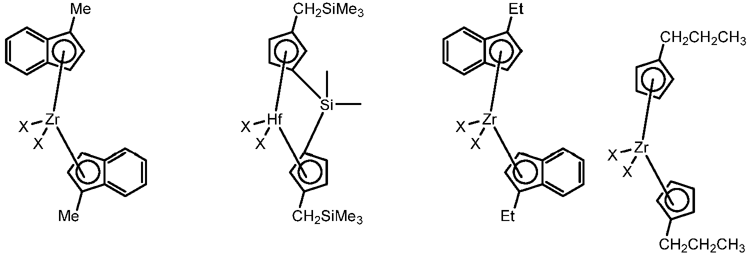 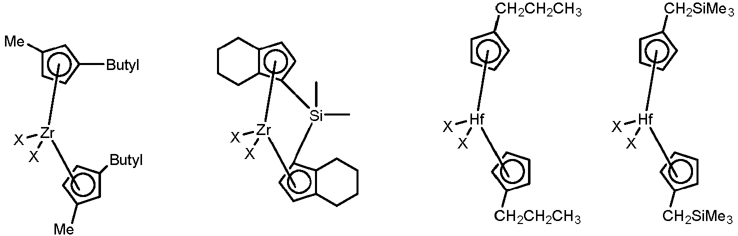 wherein X is a halide, hydride, hydrocarbyl or a labile anionic group capable of conversion into a metal hydrocarbyl group.

In at least one embodiment, the maximum amount of alumoxane is up to a 5000-fold molar excess Al/M over the catalyst compound (per metal catalytic site). The minimum alumoxane-to-catalyst-compound is a 1:1 molar ratio. Alternate preferred ranges include from 1:1 to 500:1, alternately from 1:1 to 200:1, alternately from 1:1 to 100:1, or alternately from 1:1 to 50:1

### Catalyst System

Embodiments of the present disclosure include methods for preparing a catalyst system including contacting in an aliphatic solvent the supported alumoxane with at least one catalyst compound having a Group 3 through Group 12 metal atom or lanthanide metal atom. The catalyst compound having a Group 3 through Group 12 metal atom or lanthanide metal atom can be a metallocene catalyst compound comprising a Group 4 metal.

In at least one embodiment, the supported alumoxane is heated prior to contact with the catalyst compound.

The supported alumoxane can be slurried in an aliphatic solvent and the resulting slurry is contacted with a solution of at least one catalyst compound. The catalyst compound can also be added as a solid to the slurry of the aliphatic solvent and the SMAO. In at least one embodiment, the slurry of the supported alumoxane is contacted with the catalyst compound for a period of time from about 0.02 hours to about 24 hours, such as from about 0.1 hours to about 1 hour, 0.2 hours to 0.6 hours, 2 hours to about 16 hours, or from about 4 hours to about 8 hours.

In at least one embodiment of the present disclosure, one or more catalyst compounds have a loading of between 1 and 1,000 micromoles of precatalyst per gram of supported catalyst. In preferred embodiment, one or more catalyst compounds have a loading of between 1 and 100 micromoles of precatalyst per gram of supported alumoxane. In an even more preferred embodiment, one or more catalyst compounds have a loading of between 1 and 50 micromoles of precatalyst per gram of supported alumoxane.

In at least one embodiment of the present disclosure, the catalyst system used in the polymerization comprises alumoxane at a molar ratio of aluminum to transition metal of a catalyst compound of less than 2000:1, preferably 50:1 to 1000:1, preferably 75:1 to 500:1, preferably 85:1 to 250:1; preferably 95:1 to 175:1, such as 85:1 to 125:1.

The mixture of the catalyst compound and the supported alumoxane may be heated to from about 0 degrees Celsius to about 70 degrees Celsius, such as from about 23 degrees Celsius to about 60 degrees Celsius, for example room temperature. Contact times may be from about 0.02 hours to about 24 hours, such as from about 0.1 hours to 1 hour, 0.2 hours to 0.6 hours, 2 hours to about 16 hours, or from about 4 hours to about 8 hours.

As set forth above, suitable aliphatic solvents are materials in which all of the reactants used herein, e.g., the supported alumoxane and the catalyst compound, are at least partially soluble and which are liquid at reaction temperatures. Non-limiting example solvents are non-cyclic alkanes with formula CₙH₍ₙ₊₂₎ where n = 4-30, such as isobutane, butane, isopentane, hexane, n-heptane, octane, nonane, decane and the like, and cycloalkanes with formula CₙHₙ where n = 5-30, such as cyclopentane, methylcyclopentane, cyclohexane, methylcyclohexane and the like. Suitable aliphatic solvents also include mixtures of any of the above.

The solvent can be charged into a reactor, followed by a supported alumoxane. Catalyst can then be charged into the reactor, such as a solution of catalyst in an aliphatic solvent or as a solid. The mixture can be stirred at a temperature, such as room temperature. Additional solvent may be added to the mixture to form a slurry having a desired consistency, such as from about 2 cc/g of silica to about 20 cc/g silica, such as about 4 cc/g. The solvent is then removed. Removing solvent dries the mixture and may be performed under a vacuum atmosphere, purged with inert atmosphere, heating of the mixture, or combinations thereof. For heating of the mixture, any suitable temperature can be used that evaporates the aliphatic solvent. It is to be understood that reduced pressure under vacuum will lower the boiling point of the aliphatic solvent depending on the pressure of the reactor. Solvent removal temperatures can be from about 10 degrees Celsius to about 200 degrees Celsius, such as from about 60 degrees Celsius to about 140 degrees Celsius, such as from about 60 degrees Celsius to about 120 degrees Celsius, for example about 80 degrees Celsius or less, such as about 70 degrees Celsius or less. In at least one embodiment, removing solvent includes applying heat, applying vacuum, and applying nitrogen purged from bottom of the vessel by bubbling nitrogen through the mixture. The mixture is dried.

### Polymerization Processes

Embodiments of the present disclosure include polymerization processes where monomer (such as ethylene, or propylene), and optionally comonomer (such as ethylene, propylene, 1-butene, 1-hexene, 1-octene) are contacted with a catalyst system comprising at least one catalyst compound and a supported alumoxane. At least one catalyst compound and supported alumoxane may be combined in any order, and are combined typically prior to contact with the monomer. In at least one embodiment of the present disclosure, contact between at least one catalyst compound and a supported alumoxane may occur almost immediately prior to injecting the catalyst in the reactor.

In at least one embodiment of the present disclosure, a method includes polymerizing olefins to produce a polyolefin composition by contacting at least one olefin with a catalyst system of the present disclosure and obtaining the polyolefin composition. Polymerization processes of the present disclosure can be carried out in any suitable manner. Any suitable solution, slurry or gas phase polymerization process can be used. Such processes can be run in a batch, semi-batch, or continuous mode. Polymerization may be conducted at a temperature of from about 0°C to about 300°C, at a pressure in the range of from about 0.35 MPa to about 10 MPa.

Monomers useful herein include substituted or unsubstituted C₂ to C₄₀ alpha olefins, preferably C₂ to C₂₀ alpha olefins, preferably C₂ to C₁₂ alpha olefins, preferably ethylene, propylene, butene, pentene, hexene, heptene, octene, nonene, decene, undecene, dodecene and isomers thereof. In a preferred embodiment, olefins include a monomer that is propylene and one or more optional comonomers comprising one or more ethylene or C₄ to C₄₀ olefin, preferably C₄ to C₂₀ olefin, or preferably C₆ to C₁₂ olefin. The C₄ to C₄₀ olefin monomers may be linear, branched, or cyclic. The C₄ to C₄₀ cyclic olefin may be strained or unstrained, monocyclic or polycyclic, and may include one or more heteroatoms and/or one or more functional groups. In another preferred embodiment, olefins include a monomer that is ethylene and an optional comonomer comprising one or more of C₃ to C₄₀ olefin, preferably C₄ to C₂₀ olefin, or preferably C₆ to C₁₂ olefin. The C₃ to C₄₀ olefin monomers may be linear, branched, or cyclic. The C₃ to C₄₀ cyclic olefins may be strained or unstrained, monocyclic or polycyclic, and may include heteroatoms and/or one or more functional groups.

Exemplary C₂ to C₄₀ olefin monomers and optional comonomers include ethylene, propylene, butene, pentene, hexene, heptene, octene, nonene, decene, undecene, dodecene, norbornene, norbornadiene, dicyclopentadiene, cyclopentene, cycloheptene, cyclooctene, cyclooctadiene, cyclododecene, 7-oxanorbornene, 7-oxanorbornadiene, substituted derivatives thereof, and isomers thereof, preferably hexene, heptene, octene, nonene, decene, dodecene, cyclooctene, 1,5-cyclooctadiene, 1-hydroxy-4-cyclooctene, 1-acetoxy-4-cyclooctene, 5-methylcyclopentene, cyclopentene, dicyclopentadiene, norbornene, norbornadiene, and substituted derivatives thereof, preferably norbornene, norbornadiene, and dicyclopentadiene.

In at least one embodiment, one or more dienes are present in a polymer produced herein at up to about 10 weight %, such as from about 0.00001 to about 1.0 weight %, such as from about 0.002 to about 0.5 weight %, such as from about 0.003 to about 0.2 weight %, based upon the total weight of the composition. In at least one embodiment, about 500 ppm or less of diene is added to the polymerization, such as about 400 ppm or less, such as about 300 ppm or less. In at least one embodiment, at least about 50 ppm of diene is added to the polymerization, or about 100 ppm or more, or 150 ppm or more.

Diolefin monomers include any hydrocarbon structure, preferably C₄ to C₃₀, having at least two unsaturated bonds, wherein at least two of the unsaturated bonds are readily incorporated into a polymer by either a stereospecific or a non-stereospecific catalyst(s). It is further preferred that the diolefin monomers be selected from alpha, omega-diene monomers (i.e., di-vinyl monomers). In at least one embodiment, the diolefin monomers are linear di-vinyl monomers, such as those containing from 4 to 30 carbon atoms. Non-limiting examples of dienes include butadiene, pentadiene, hexadiene, heptadiene, octadiene, nonadiene, decadiene, undecadiene, dodecadiene, tridecadiene, tetradecadiene, pentadecadiene, hexadecadiene, heptadecadiene, octadecadiene, nonadecadiene, icosadiene, heneicosadiene, docosadiene, tricosadiene, tetracosadiene, pentacosadiene, hexacosadiene, heptacosadiene, octacosadiene, nonacosadiene, triacontadiene, particularly preferred dienes include 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, and low molecular weight polybutadienes (Mw less than 1000 g/mol). Non-limiting example cyclic dienes include cyclopentadiene, vinylnorbornene, norbornadiene, ethylidene norbornene, divinylbenzene, dicyclopentadiene or higher ring containing diolefins with or without substituents at various ring positions.

In at least one embodiment, where butene is the comonomer, the butene source may be a mixed butene stream comprising various isomers of butene. The 1-butene monomers are expected to be preferentially consumed by the polymerization process as compared to other butene monomers. Use of such mixed butene streams will provide an economic benefit, as these mixed streams are often waste streams from refining processes, for example, C₄ raffinate streams, and can therefore be substantially less expensive than pure 1-butene.

Hydrogen, may be added to a reactor for molecular weight control of polyolefins. In at least one embodiment, the hydrogen is present in the polymerization reactor between 0 and 30 mol %. In a preferred embodiment, hydrogen is present in the polymerization reactor between 0 and 10 mol %. In a more preferred embodiment, hydrogen is present in the polymerization reactor between 0 and 1 mol %. In an even more preferred embodiment, hydrogen is present in the polymerization reactor between 0 and 0.2 mol %.

In a preferred embodiment, little or no scavenger is used in the process to produce the polyolefin composition. Preferably, scavenger (such as trialkylaluminum or dialkylzinc) is present at zero mol %. Alternatively, the scavenger is present at a molar ratio of scavenger metal to transition metal of the catalyst of less than about 100:1, such as less than about 50:1, such as less than about 15:1, such as less than about 10:1. Such scavengers can also be used as chain transfer agents in amounts > 10:1 scavenger metal: transition metal.

In at least one embodiment of the present disclosure, a method includes polymerizing olefins in the presence of hydrocarbons. Useful hydrocarbons include C₂-C₂₀ hydrocarbons. Preferred hydrocarbons are contain between three and twelve carbons. Even more preferred hydrocarbons contain between three and six carbons. Examples of preferred hydrocarbons include, but are not limited to propane, butane, isobutane, isopentane, pentane, cyclopentane, isohexane, and hexane.

Preferred polymerizations can be run at any temperature and/or pressure suitable to obtain the desired polyolefins. Typical temperatures and/or pressures include a temperature from about 0°C to about 300°C, such as from about 20°C to about 200°C, such as from about 35°C to about 150°C, such as from about 40°C to about 120°C, such as from about 65°C to about 95°C; and at a pressure from about 0.35 MPa to about 10 MPa, such as from about 0.45 MPa to about 6 MPa, or preferably from about 0.5 MPa to about 4 MPa.

In at least one embodiment of the present disclosure, the polymerization takes place in one or more "reaction zones." A "reaction zone", also referred to as a "polymerization zone", is a vessel where polymerization takes place, for example a batch or continuous reactor. When multiple reactors are used in either series or parallel configuration, each reactor is considered as a separate polymerization zone. For a multi-stage polymerization in both a batch reactor and a continuous reactor, each polymerization stage is considered as a separate polymerization zone. In another embodiment, a series of polymerization zones encompass a gradient of temperature, solvent, or monomer concentration within one reactor body.

Gas phase polymerization: Generally, in a fluidized gas bed process used for producing polymers, a gaseous stream containing one or more monomers is continuously cycled through a fluidized bed in the presence of a catalyst under reactive conditions. In some embodiments, the reaction medium includes condensing agents, which are typically non-coordinating inert liquids that are converted to gas in the polymerization processes, such as isopentane, isohexane, or isobutane. The gaseous stream is withdrawn from the fluidized bed and recycled back into the reactor. Simultaneously, polymer product is withdrawn from the reactor and fresh monomer is added to replace the polymerized monomer. (See, for example, US Patents 4,543,399; 4,588,790; 5,028,670; 5,317,036; 5,352,749; 5,405,922; 5,436,304; 5,453,471; 5,462,999; 5,616,661; and 5,668,228.)

Slurry phase polymerization: A slurry polymerization process generally operates between 1 to about 50 atmosphere pressure range (15 psi to 735 psi, 103 kPa to 5068 kPa) or even greater and temperatures in the range of 0°C to about 120°C. In a slurry polymerization, a suspension of solid, particulate polymer is formed in a liquid polymerization diluent medium to which monomer and comonomers, along with catalysts, are added. The suspension including diluent is intermittently or continuously removed from the reactor where the volatile components are separated from the polymer and recycled, optionally after a distillation, to the reactor. The liquid diluent employed in the polymerization medium is typically an alkane having from 3 to 7 carbon atoms, preferably a branched alkane. The medium employed should be liquid under the conditions of polymerization and relatively inert. When a propane medium is used, the process should be operated above the reaction diluent critical temperature and pressure. Preferably, a hexane or an isobutane medium is employed.

### Polymer Products

The present disclosure also relates to polymer products, e.g., polyolefin compositions, such as resins, produced by the catalyst systems of the present disclosure. Polymer products of the present disclosure can have no detectable aromatic solvent. Alternatively, the polymer products of the present disclosure may be substantially free of aromatic solvent, e.g., less than about 0.1 wt% of solvent based on the weight of the polymer product, such as less than about 1ppm.

In at least one embodiment, a process includes utilizing a catalyst system of the present disclosure to produce propylene homopolymers or propylene copolymers, such as propylene-ethylene and/or propylene-alphaolefin (preferably C₃ to C₂₀) copolymers (such as propylene-hexene copolymers or propylene-octene copolymers) having an Mw/Mn of greater than about 2, such as greater than about 3, such as greater than about 4, such as greater than about 5.

In at least one embodiment, a process includes utilizing a catalyst system of the present disclosure to produce olefin polymers, preferably polyethylene and polypropylene homopolymers and copolymers. In at least one embodiment, the polymers produced herein are homopolymers of ethylene or copolymers of ethylene preferably having from about 0 and 25 mol% of one or more C₃ to C₂₀ olefin comonomer (such as from about 0.5 and 20 mol%, such as from about 1 to about 15 mol%, such as from about 3 to about 10 mol%). Olefin comonomers may be C₃ to C₁₂ alpha-olefins, such as one or more of propylene, butene, hexene, octene, decene, or dodecene, preferably propylene, butene, hexene, or octene. Olefin monomers may be one or more of ethylene or C₄ to C₁₂ alpha-olefin, preferably ethylene, butene, hexene, octene, decene, or dodecene, preferably ethylene, butene, hexene, or octene.

Polymers produced herein may have an Mw of from about 5,000 to about 10,000,000 g/mol (such as from about 25,000 to about 750,000 g/mol, such as from about 50,000 to about 500,000 g/mol), and/or an Mw/Mn of from about 2 to about 50 (such as from about 2.5 to about 20, such as from about 3 to about 10, such as from about 4 to about 5).

Polymers produced herein may have a melt index (MI) (I₂) of less than about 400 g/10 min, such as less than about 100. Additionally or alternatively, polymers produced herein may have a high load melt index to melt index (HLMI/MI) ratio of from about 12 to about 100, such as about 15 to about 50.

Polymers produced herein may have a (g'ᵥᵢₛ) of greater than about 0.900, such as greater than 0.955, such as greater than 0.995.

Polymers produced herein may have a density of about 0.920 g/cm³, about 0.918 g/cm³, about 0.880 g/cm³, or ≥ about 0.910 g/cm³, e.g., ≥ about 0.919 g/cm³, ≥ about 0.92 g/cm³, ≥ about 0.930 g/cm³, ≥ about 0.932 g/cm³. Additionally, the polyethylene composition may have a density ≤ about 0.965 g/cm³, e.g., ≤ about 0.945 g/cm³, ≤ about 0.940 g/cm³, ≤ about 0.937 g/cm³, ≤ about 0.935 g/cm³, ≤ about 0.933 g/cm³, or ≤ about 0.930 g/cm³. Ranges expressly disclosed include, but are not limited to, ranges formed by combinations any of the above-enumerated values, e.g., about 0.880 to about 0.965 g/cm³, 0.920 to 0.930 g/cm³, 0.925 to 0.935 g/cm³, 0.920 to 0.940 g/cm³, etc.

### Blends

In at least one embodiment, the polymer (such as polyethylene or polypropylene) produced herein and having no detectable aromatic solvent is combined with one or more additional polymers prior to being formed into a film, molded part or other article. Other useful polymers, which may or may not contain a detectable amount of aromatic solvent, include polyethylene, isotactic polypropylene, highly isotactic polypropylene, syndiotactic polypropylene, random copolymer of propylene and ethylene, and/or butene, and/or hexene, polybutene, ethylene vinyl acetate, LDPE, LLDPE, HDPE, ethylene vinyl acetate, ethylene methyl acrylate, copolymers of acrylic acid, polymethylmethacrylate or any other polymers polymerizable by a high-pressure free radical process, polyvinylchloride, polybutene-1, isotactic polybutene, ABS resins, ethylene-propylene rubber (EPR), vulcanized EPR, EPDM, block copolymer, styrenic
block copolymers, polyamides, polycarbonates, PET resins, cross linked polyethylene, copolymers of ethylene and vinyl alcohol (EVOH), polymers of aromatic monomers such as polystyrene, poly-1 esters, polyacetal, polyvinylidine fluoride, polyethylene glycols, and/or polyisobutylene.

In at least one embodiment, the polymer (such as polyethylene or polypropylene) is present in the above blends, at from about 10 to about 99 wt%, based upon the weight of total polymers in the blend, such as from about 20 to about 95 wt%, such as from about 30 to about 90 wt%, such as from about 40 to about 90 wt%, such as from about 50 to about 90 wt%, such as from about 60 to about 90 wt%, such as from about 70 to about 90 wt%.

Blends of the present disclosure may be produced by mixing the polymers of the present disclosure with one or more polymers (as described above), by connecting reactors together in series to make reactor blends or by using more than one catalyst in the same reactor to produce multiple species of polymer. The polymers can be mixed together prior to being put into the extruder or may be mixed in an extruder.

Blends of the present disclosure may be formed using conventional equipment and methods, such as by dry blending the individual components, such as polymers, and subsequently melt mixing in a mixer, or by mixing the components together directly in a mixer, such as, for example, a Banbury mixer, a Haake mixer, a Brabender internal mixer, or a single or twin-screw extruder, which may include a compounding extruder and a side-arm extruder used directly downstream of a polymerization process, which may include blending powders or pellets of the resins at the hopper of the film extruder. Additionally, additives may be included in the blend, in one or more components of the blend, and/or in a product formed from the blend, such as a film, as desired. Such additives can include, for example: fillers; antioxidants (e.g., hindered phenolics such as IRGANOX^{™} 1010 or IRGANOX^{™} 1076 available from Ciba-Geigy); phosphites (e.g., IRGAFOS^{™} 168 available from Ciba-Geigy); anti-cling additives; tackifiers, such as polybutenes, terpene resins, aliphatic and aromatic hydrocarbon resins, alkali metal and glycerol stearates, and hydrogenated rosins; UV stabilizers; heat stabilizers; anti-blocking agents; release agents; anti-static agents; pigments; colorants; dyes; waxes; silica; fillers; talc; mixtures thereof, and the like.

In at least one embodiment, a polyolefin composition, such as a resin, that is a multimodal polyolefin composition comprises a low molecular weight fraction and/or a high molecular weight fraction. In at least one embodiment, the polyolefin composition produced by a catalyst system of the present disclosure has a comonomer content from about 3 wt% to about 15 wt%, such as from about 4 wt% and bout 10 wt%, such as from about 5 wt% to about 8 wt%. In at least one embodiment, the polyolefin composition produced by a catalyst system of the present disclosure has a polydispersity index of from about 2 to about 6, such as from about 2 to about 5.

### Films

Any of the foregoing polymers, such as the foregoing polyethylenes or blends thereof, may be used in a variety of end-use applications. Such applications include, for example, mono- or multi-layer blown, extruded, and/or shrink films. These films may be formed by any suitable extrusion or coextrusion techniques, such as a blown bubble film processing technique, where the composition can be extruded in a molten state through an annular die and then expanded to form a uni-axial or biaxial orientation melt prior to being cooled to form a tubular, blown film, which can then be axially slit and unfolded to form a flat film. Films may be subsequently unoriented, uniaxially oriented, or biaxially oriented to the same or different extents. One or more of the layers of the film may be oriented in the transverse and/or longitudinal directions to the same or different extents. The uniaxially orientation can be accomplished using typical cold drawing or hot drawing methods. Biaxial orientation can be accomplished using tenter frame equipment or a double bubble process and may occur before or after the individual layers are brought together. For example, a polyethylene layer can be extrusion coated or laminated onto an oriented polypropylene layer or the polyethylene and polypropylene can be coextruded together into a film then oriented. Likewise, oriented polypropylene could be laminated to oriented polyethylene or oriented polyethylene could be coated onto polypropylene then optionally the combination could be oriented even further. Typically the films are oriented in the Machine Direction (MD) at a ratio of up to 15, preferably between 5 and 7, and in the Transverse Direction (TD) at a ratio of up to 15, preferably 7 to 9. However, in another embodiment, the film is oriented to the same extent in both the MD and TD directions.

The films may vary in thickness depending on the intended application; however, films of a thickness from 1 µm to 50 µm may be suitable. Films intended for packaging are usually from 10 µm to 50 µm thick. The thickness of the sealing layer is typically 0.2 µm to 50 µm. There may be a sealing layer on both the inner and outer surfaces of the film or the sealing layer may be present on only the inner or the outer surface.

In another embodiment, one or more layers may be modified by corona treatment, electron beam irradiation, gamma irradiation, flame treatment, or microwave. In a preferred embodiment, one or both of the surface layers is modified by corona treatment.

The polymer produced herein may be combined with one or more additional polymers prior to being formed into a film, molded part, or other article. Other useful polymers include polyethylene, isotactic polypropylene, highly isotactic polypropylene, syndiotactic polypropylene, random copolymer of propylene and ethylene, and/or butene, and/or hexene, polybutene, ethylene vinyl acetate, LDPE, LLDPE, HDPE, ethylene vinyl acetate, ethylene methyl acrylate, copolymers of acrylic acid, polymethylmethacrylate or any other polymers polymerizable by a high-pressure free radical process, polyvinylchloride, polybutene-1, isotactic polybutene, ABS resins, ethylene-propylene rubber (EPR), vulcanized EPR, EPDM, block copolymer, styrenic block copolymers, polyamides, polycarbonates, PET resins, cross linked polyethylene, copolymers of ethylene and vinyl alcohol (EVOH), polymers of aromatic monomers such as polystyrene, poly-1 esters, polyacetal, polyvinylidine fluoride, polyethylene glycols, and/or polyisobutylene. Additionally, additives may be included in the blend, in one or more components of the blend, and/or in a product formed from the blend, such as a film, as desired.

Overall, it has been discovered that an alumoxane precursor, which is easy to store and ship, can be used to form supported alumoxane precursor and supported alumoxane. The shelf lives of the alumoxane precursor and the supported alumoxane precursor are longer than that of MAO, which is an intermediate product in conventional methods for forming supported alumoxane.

### Examples

**General Comments.** Methacrylic acid (MAA) was sparged with N₂ immediately prior to use. Aluminum alkyls and solvents were obtained from Aldrich Chemical Company. Anhydrous heptane and toluene were sparged with N₂ then stored over dry 3 Å molecular sieves. ES70, 5% Al on ES70, ES70X, and PD14024 Silica were obtained from PQ Corporation. Silica were dehydrated in a tube furnace under a stream of flowing N₂; the temperature of dehydration in degrees Celsius (°C) is indicated in brackets within the text. (PrCp)₂HfMe₂ (MCN 1) was obtained from Boulder Scientific. The hemialkoxide Me₂Al(µ-Me)(µ-OCMe₂CMe=CH₂)AlMe₂ was prepared by treatment of trimethylaluminum (TMA) with ½ MeC(O)CMe=CH₂ in pentane at low temperature. TMA chemisorption on supports was determined by following the loss of TMA in a solution with C₆D₆, or other inert deuterated solvent, relative to an internal standard upon combination with support after correcting for TMA losses to glassware, etc.

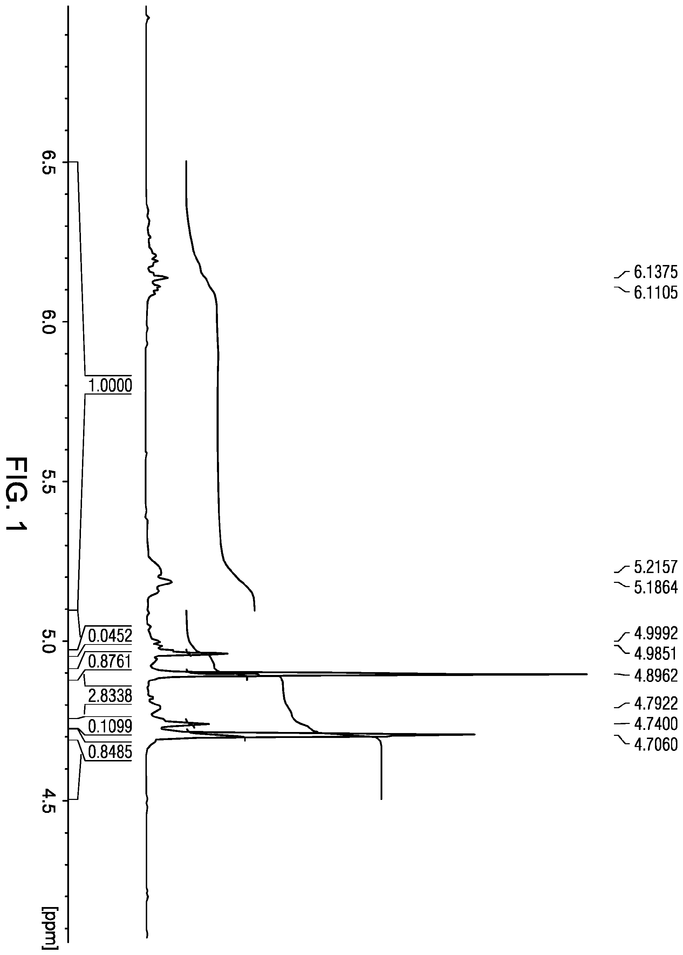

**Example 1** - **Comp.** A 250 mL 3-neck flask equipped with a mechanical stirrer was placed in a cold bath at 0°C. To the flask, neat TMA (7.5055 g, 104 mmol) and pentane (48 mL) were added to make TMA solution. To the cold stirred solution of TMA, neat MAA (2.9895 g, 34.6 mmol) was added slowly at the rate of 0.3 mL / 12 s. After completion, the mixture was stirred for 20 minutes at cold temperature then warm to room temp and stirred for further 20 minutes. An aliquot of the mixture was removed, with the vinyl region of an ¹H NMR(C₆D₆) spectrum of the aliquot shown in Figure 1. ES70(875) 16.0147 g was added to the flask, then more pentane (10 mL) and the slurry was stirred for 20 minutes. The pentane was removed under vacuum for 3 hours to afford the precursor to SMAO (yield 24.02 g). An aliquot of the precursor (3.5514 g) was placed inside a stainless-steel bomb, and heated at 120°C for 3 hours. To an overhead stirred slurry of the resulting SMAO and pentane (20 mL), a solution of MCN 1 (43.7 mg, 0.1 mmol) and pentane (5 mL) was added dropwise over the course of 5 minutes then stirred for an additional hour then filtered and dried *in-vacuo* to yield a supported catalyst.

**Example 2a. Representative Preparation of Precursor.** A 3 L three-neck flask equipped with mechanical stirrer, addition funnel, and a very efficient condenser (similar to a dry-ice condenser - cooled with a cold-finger and heptane to - 55°C) with takeoff adapter was charged with TMA (116.3 g, 1.61 mol) and pentane (700 mL) and stirred at 120 RPM. Next a solution of MAA (36.35 g, 0.42 mol) and pentane (300 mL) was added at a rate to maintain a controlled reflux. After addition, the reflux was maintained by gentle heating for 1 hour.

**Example 2b. Representative SMAO Preparation from Precursor.** To the precursor solution was added portion-wise ES70(200) silica (210.6 g). The slurry was stirred for 30 minutes. Then the pentane was removed by simple distillation. The flask was then equipped with a vacuum-jacketed Vigereaux column and distillation head that exited to a cold trap. The flask was heated to an internal wall temperature of approximately 120°C and stirred for 5 hours and the volatiles were allowed to distill out into the cold trap. Then, the solids were dried under vacuum at temperature for 3 hours. Yield was 293.2 g SMAO.

**Example 2c. Representative Large Scale Catalyst Preparation.** A 3 L three-neck flask equipped with mechanical stirrer was charged with pentane (900 mL) and SMAO obtained from Ex. 2b (260.34 g) and stirred at 120 RPM. Then, a solution of MCN 1 (4.4818 g, 10.6 mmol) and pentane (100 mL) was added via addition funnel over the course of 1 hour. After stirring an additional 2 hours, the slurry was filtered, returned to the stirrer equipped flask and the solid dried at 40°C with gentle stirring for 2 hours. Yield was 261.4 g white catalyst.

**Examples 3** - **5.** For each of Examples 3 and 5, precursor, SMAO, and catalyst were prepared in accordance with the procedures of Exs. 2a, 2b, and 2c. For Ex. 4, precursor and SMAO were prepared in accordance with the procedure of Ex. 2a and 2b, and catalyst was prepared from the SMAO in accordance with the procedure of Ex. 6c, except that the SMAO was Soxhlet extracted with hexane for 6 hours then dried beforehand. Additional details of the catalysts prepared in Examples 3-5 are depicted in Table 3.

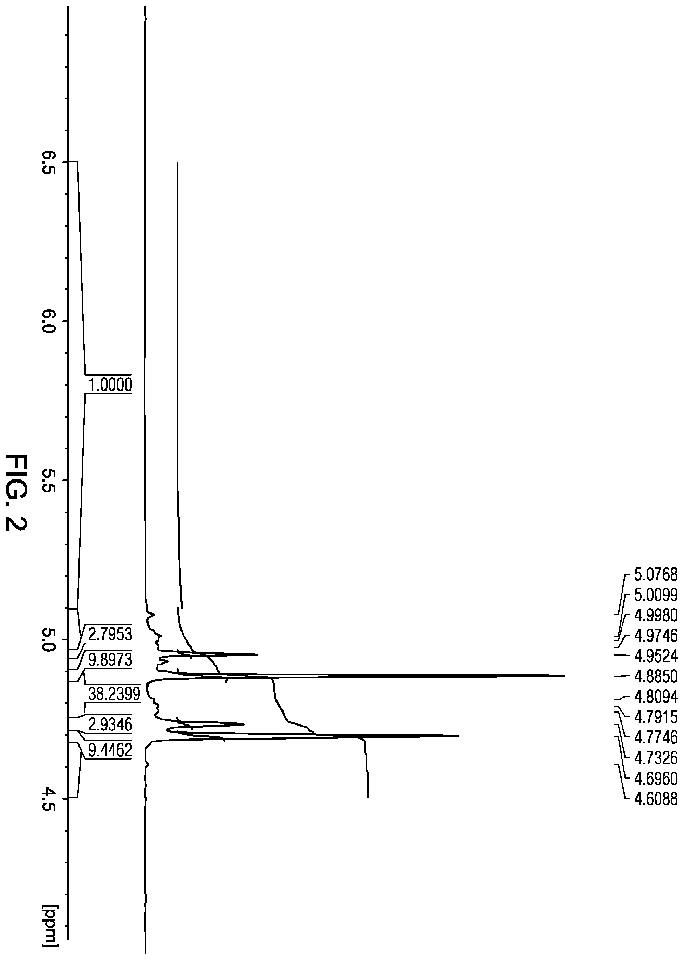

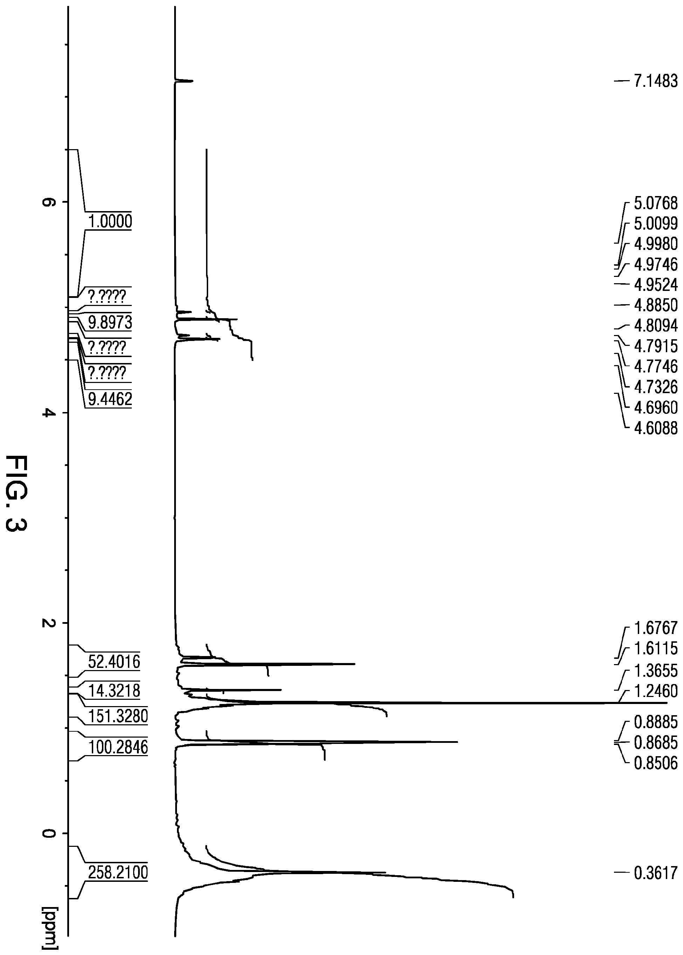

**Example 6a. Representative Preparation of Concentrated Precursor.** A 3 L three-neck flask equipped with mechanical stirrer, addition funnel, and a very efficient condenser (similar to a dry-ice condenser - cooled with a cold-finger and heptane to - 55°C) with takeoff adapter was charged with TMA (90.85 g, 1.26 mol) and pentane (700 mL) and stirred for 15 minutes. Next a solution of MAA (36.17 g, 0.42 mol) and pentane (300 mL) was added at a rate to maintain a controlled reflux over the course of 60 minutes. After addition, the reflux was maintained by gentle heating for 1 hour. The pentane was removed by simple distillation to afford the MAO precursor as a colorless oil. The oil was stored at -45°C until use. Yield was 151 g. NMR analysis showed the oil contained 17.6 wt % pentane, and 2.88 equivalents MAA/g of oil. ¹H NMR(C₆D₆) of the concentrated precursor is shown in Figures 2 and 3. ¹H NMR(C₆D₆) of the concentrated precursor both before and after the addition of hemialkoxide Me₂Al(µ-Me)(µ-OCMe₂CMe=CH₂)AlMe₂ is shown in Figure 4.

**Example 6b. Representative SMAO Prep from Concentrated Precursor.** A 250 mL 3-neck flask was equipped with mechanical stirrer, vacuum-jacketed Vigereaux column and a distillation head connected to an efficient cold trap. The flask was charged with pentane (100 mL), TMA (1.611 mL, 16.8 mmol) and concentrated precursor oil (6.9784 g, 20.1 mmol equiv. of MAA) and stirred for 5 minutes. ES70(200) (10.03 g) was added to the stirred solution, then the slurry was stirred at room temperature for 30 minutes. The pentane was distilled from the slurry. The temperature was then raised such that the internal wall temperature of the flask was ca. 120°C. Heating was continued for 3 hours while the volatiles were allowed to distill away from the reaction then vacuum was applied for 2 hours. Yield was 13.9 g SMAO as a white solid.

**Example 6c.** A solution of MCN 1 (36.1 mg, 0.085 mmol) in pentane (5 mL) was added to an overhead stirred slurry of SMAO (2.0309 g) and pentane (25 mL). After 30 minutes, the slurry was filtered and the solid dried under vacuum for 1 hour. Yield was 1.82 g of white solid.

**Example 7** - **13.** For each of Examples 7-11, precursor, SMAO, and catalyst were prepared in accordance with the procedure of Ex. 6a, 6b, and 6c. For Ex. 12, precursor and SMAO were prepared in accordance with the procedure of Ex. 6a and 6b, and catalyst was prepared from the SMAO in accordance with the procedure of Example 6c except that the SMAO was Soxhlet extracted with hexane then dried beforehand. For Ex. 13, precursor and SMAO were prepared in accordance with the procedure of Ex. 6a and 6b, and catalyst was prepared from the SMAO in accordance with the procedure of Example 6c except that the SMAO was Soxhlet extracted with hexane then dried beforehand and the catalyst was prepared with approximately twice the amount of MCN 1 used in Ex. 6c.

**Example 14.** For Example 14, precursor, SMAO, and catalyst were prepared in accordance with the procedure of Ex. 6, except that the catalyst was isolated from the slurry by removing the solvent *in-vacuo* instead of by filtration.

**Example 15a.** A mixture of 6 wt% (NH₄)₂SiF₆ and 94 wt % of 5% Al on ES70 was fluidized with a stream of dry air and heated at 30 - 50°C/h up to 650°C, held for 3 hours, then cooled to ambient temperature then the air was removed with a N₂ purge.

**Examples 15b.** FAS-SMAO was prepared in accordance with the procedure of Ex. 6b except substituting the FAS prepared in Ex. 15a in place of ES70, with additional details shown in Table 3.

**Example 15c.** Catalyst was prepared from the FAS-SMAO of Ex. 15b in accordance with the procedure of Ex. 6c. Additional details of the catalyst prepared in Example 15c are depicted in Table 3.

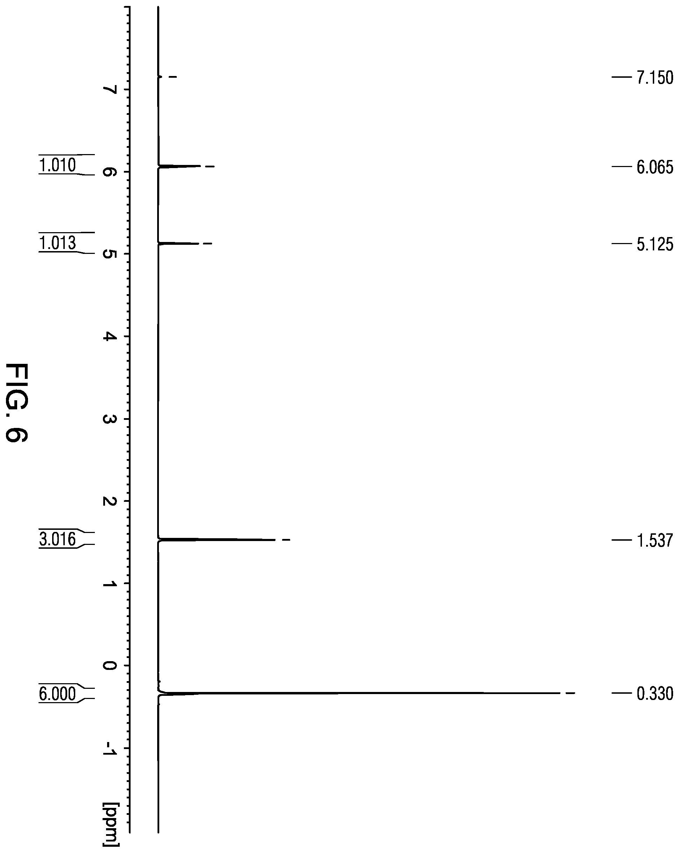

**Example 16a. Preparation and Characterization of [Me₂Al(µ-O₂CCMe=CH₂)]₂.** TMA (10.8 g; 150 mmol) in iso-hexane (50 mL) was cooled to -47°C with stirring. MAA (13.0 g; 150 mmol) was dissolved in isohexane (ca. 30 ml) and kept cold, just above the temperature that the MAA would begin to crystallize out. It was added dropwise in about 1 mL portions over about 30 minutes. A colorless precipitate formed. After the addition was finished the reaction was stirred 10 minutes at -47°C then warmed up. The precipitate redissolved except for some solid stuck to the side of the flask. About 25 mL of the solvent was evaporated off and the solution was decanted into a 100 mL flask and cooled to -47°C for about half an hour. A colorless crystalline solid formed and was isolated by decanting and dried under vacuum, probably about half the expected product. The supernatant was dried down to a clear colorless liquid; iso-hexane (ca. 25 mL) was added and the mixture cooled to -24°C. A solid product (ca. 11 g) was obtained. A portion of the solid (0.662 g) was dissolved in isohexane (ca. 10 mL) and cooled to -24°C. The solution was concentrated to about 7 mL and cooled to -24°C. Most of the iso-hexane was removed and the sample redissolved in about 2 mL pentane and cooled to -24°C. Some crystals grew. One crystal was mounted on the crystal holder in the drybox by putting it in a small plastic straw filled with silicone grease, one end of the straw was attached to the crystal holder. This gave good diffraction. Crystallographic data for [Me₂Al(µ-O₂CCMe=CH₂)]₂ is shown in Table 1. An Ortep drawing is shown in Figure 5. ¹H NMR(C₆D₆) of precursor solution is shown in Figure 6.

**Table 1. Crystallographic data for [Me₂Al(µ-O₂CCMe=CH₂)]₂**

| **Space Group** | **P-1** |
|---|---|
| a (Å) | 7.5427(15) |
| b (Å) | 9.0267(18) |
| c (Å) | 12.669(3) |
| α (deg) | 84.28(3) |
| β (deg) | 76.37(3) |
| γ (deg) | 72.41(3) |
| Volume (Å³) | 798.7(3) |
| Cell Formula Units (Z) | 2 |
| Goodness of Fit on F2 | 1.163 |

**Example 16b. SMAO Prep from [Me₂Al(µ-O₂CCMe=CH₂)]₂.** A 250 mL 3-neck flask was equipped with mechanical stirrer, and a vacuum-jacketed Vigereaux column. The flask was charged with pentane (100 mL), a solution of [Me₂Al(µ-O₂CCMe=CH₂)]₂ (2.8497 g, 10.0 mmol) and pentane (5 mL) then TMA (4.0955 g, 56.8 mmol). The mixture was heated to gentle reflux for 2 hours (stopper at top of column) then stirred overnight without heating. The mixture was slightly hazy. ES70(200) (10.04 g) was added, then the slurry was stirred at room temperature for 5 minutes. The pentane was distilled from the slurry. The temperature was then raised such that the internal wall temperature of the flask was ca. 120°C. Heating was continued for 3 hours while the volatiles were allowed to distill away from the reaction then vacuum was applied for 2 hours. Yield was 14.0 g SMAO as white solid.

**Example 16c.** Catalyst was prepared from the SMAO of Ex. 16b in accordance with the procedure of Example 6c.

**Example 17a. Concentrated Precursor Synthesis.** A solution of methacrylic acid (30.16 g, 0.35 mol) and pentane (300 mL) was added to a solution of TMA (75.7g, 1.05 mol) and pentane (500 mL) prepared in accordance with the procedure of Ex. 6a over 1 hour, heating to reflux for additional hour then reducing to an oil by distillation of pentane. NMR analysis showed 19 wt % pentane, and 2.8 mmol MAA equiv. /g of oil.

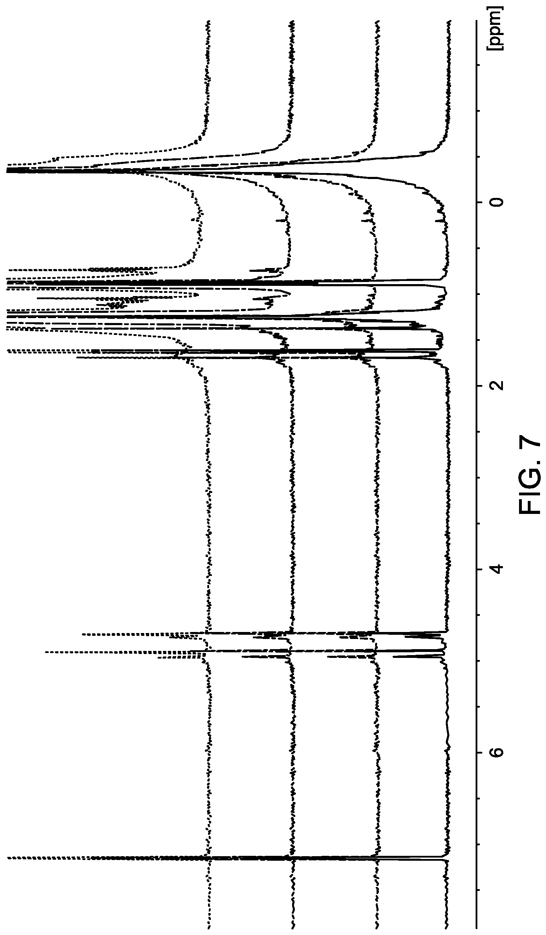

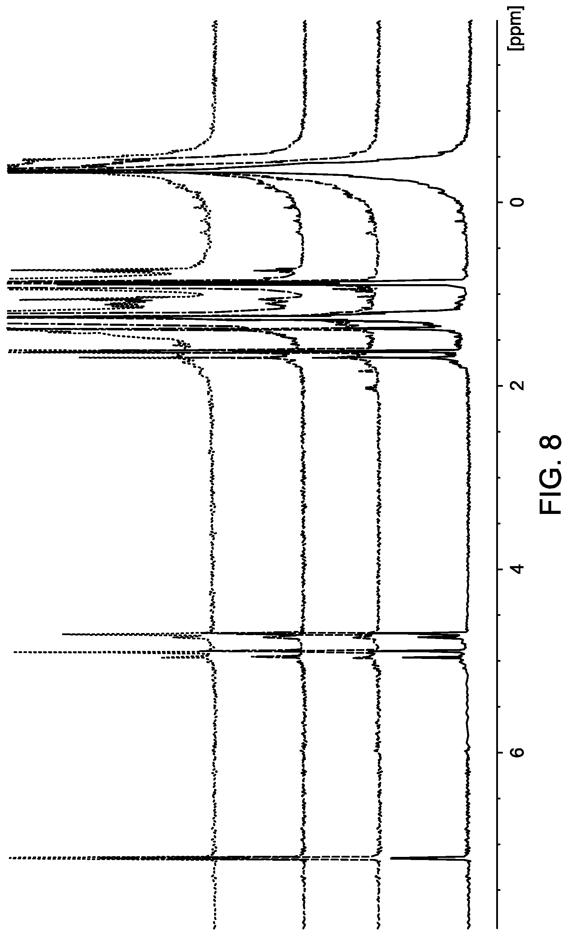

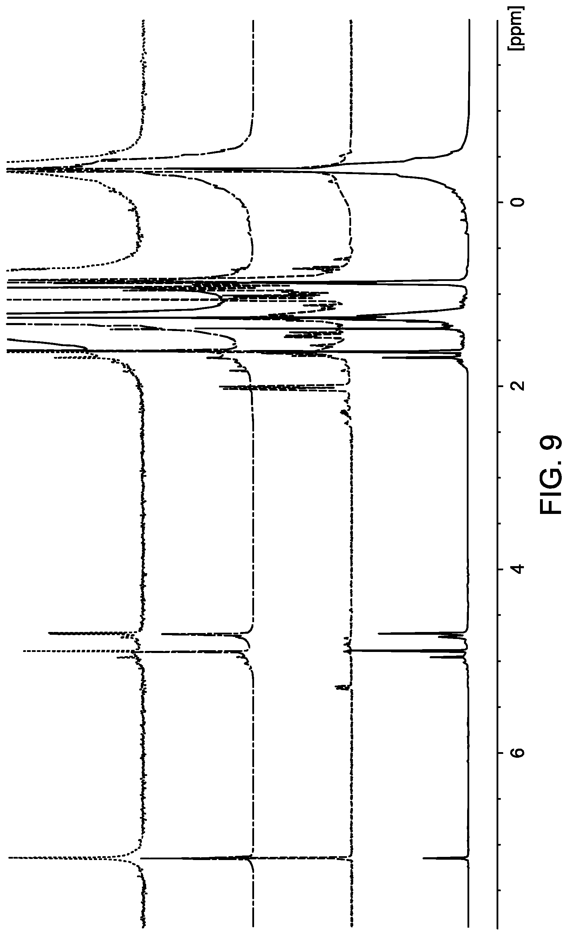

**Example 17b. Precursor Stability Study.** A series of solutions (Samples A-I) were prepared from concentrated precursor prepared in accordance with Ex. 17a and heptane. These are shown in Table 2. Samples A-C were stored at -10°C, Samples D-F were stored at room temperature, and Samples G-I were stored at 40°C, in each case for three weeks. At -10°C, no significant change was observed in the NMR between the concentrate and the solutions. At room temperature, the concentrate showed trace amounts of 2,3-dimethyl-pent-2-ene but the solutions were largely unchanged. At 40°C, the concentrate decomposed to a glassy solid and had a complicated NMR spectrum, however the solutions showed only minor changes. Absent this exception, no other solids were observed which along with the NMR studies indicate precursor solutions have good storage stability. NMR spectra are shown in Figures 7 - 9.

**Table 2. Precursor Concentrations for Stability Testing**

| -10°C | | | Room Temperature | | | 40°C | | |
|---|---|---|---|---|---|---|---|---|
| Sample | Precursor (g) | Heptane (mL) | Sample | Precursor (g) | Heptane (mL) | Sample | Precursor (g) | Heptane (mL) |
| A | 0.3685 | 0 | D | 0.3621 | 0 | G | 0.3543 | 0 |
| B | 0.3565 | 1 | E | 0.3598 | 1 | H | 0.3541 | 1 |
| C | 0.3665 | 5 | F | 0.3686 | 5 | I | 0.3693 | 5 |

**Catalyst Polymerization Testing.** A 2 L autoclave was charged, under N₂, with NaCl (350 g), and TIBAL-SiO₂ scavenger (4 to 6 g of 1.9 mmol TIBAL / g ES70(100)) and heated for 30 minutes at ≥ 85°C. The reactor was cooled to ~81°C. 1-Hexene (2.5 mL) and 10 mol % H₂ in N₂ (120 SCCM) were added then the stirring was commenced (450 RPM). Solid catalyst (~ 10 mg) was injected into the reactor with ethylene (+220 psia). After the injection, the reactor temperature was controlled at 85°C and ethylene allowed to flow into the reactor to maintain pressure. Both H₂ in N₂, and hexene were fed in at 0.5 mg/g and 0.1 g/g ratio to the ethylene flow respectively. The polymerization was halted after approximately 60 minutes by venting the reactor. The polymer was washed with water to remove salt then dried. Productivities are reported in Table 3 in (g Pol/g cat h).

**Table 3. Lab gas-phase polymerization testing**

| **Example** | **Support** | **Equiv. MAA Loading (mmol/g)** | **Total TMA/MAA (mol/mol)** | **Prep from Concentrate** | **Support Mass (g)** | **Heating Time (h) at 120 C Open/Vac** | **SMAO Yield (g)** | **Average Productivity** | **Note** |
|---|---|---|---|---|---|---|---|---|---|
| 1 - Comp | ES70(875) | 2 | 3 | No | 16.0147 | NA | 24.02 | 2,532* | Comparative heated in bomb |
| 2 | ES70(200) | 2 | 3.83 | No | 210.6 | 5/3 | 293.2 | 7,523 | In-Situ Prep 1 |
| 3 | ES70(200) | 2 | 3.83 | No | 210.1 | 5/3 | 296.7 | 6,894 | In-Situ Prep 2 |
| 4 | ES70(200) | 2 | 3.85 | No | 210 | 5/3 | 307.3 | 9,399 | Extracted SMAO with Hexane |
| 5 | ES70X(200) | 2 | 3.84 | No | 35.1 | 3/1 | 49.8 | 5,996 | Larger Particle Size (50 um) |
| 6 | ES70(200) | 2 | 3.76 | Yes | 10.0 | 3/2 | 13.9 | 6,503 | High TMA/MAA |
| 7 | ES70(200) | 2 | 3.37 | Yes | 10.1 | 3/2 | 13.93 | 6,043 | Medium TMA/MAA |
| 8 | ES70(200) | 2 | 3 | Yes | 10.1 | 3/2 | 13.85 | 1,476 | Low TMA/MAA |
| 9 | ES70(200) | 2 | 3.82 | Yes | 10.0 | 0/6 | 13.21 | 2,897* | Vacuum during heating |
| 10 | ES70(200) | 1.5 | 4.12 | Yes | 35.2 | 3/1 | 46.37 | 3,437 | Lower MAA loading |
| 11 | ES70(875) | 2 | 3.51 | Yes | 35.2 | 3/1 | 48.87 | 6,753 | High Silica Dehydration Temp |
| 12 | PD 14024 | 4 | 4 | Yes | 28.5 | 3/2 | 37.15 | 10,024* | High SA, Hexane Extract SMAO |
| 13 | PD 14024 | 4 | 4 | Yes | 28.5 | 3/2 | 37.15 | 9,942* | High SA, High MCN loading, Hexane Extract SMAO |
| 14 | ES70(200) | 2 | 3.83 | Yes | 10.0 | 3/2 | 13.9 | 7,936* | Catalyst Dried In-vacuo |
| 15 | FA1-ES70(650) | 2 | 3.22 | Yes | 10.0 | 3/2 | 13.71 | 11,016* | Fluorided Alumina Silica |
| 16 | ES70(200) | 2 | 3.84 | Yes | 10 | 3/2 | 14.02 | 7,423* | [Me2AlO2C(Me)=CH2]2 |

Productivity is the average of two runs except where indicated. *Polymerizations were carried out once

## Claims

1. A composition comprising: (i) a reaction product of at least one non-hydrolytic oxygen-containing compound and at least one hydrocarbyl aluminum; and (ii) an aliphatic hydrocarbon fluid, wherein the molar ratio of aluminum to non-hydrolytic oxygen in the composition is greater than or equal to 1.5, wherein the reaction product has a first set of signals in an ¹H Nuclear Magnetic Resonance spectrum in a region from 4.5 ppm to 5.1 ppm and a second set of signals in an ¹H Nuclear Magnetic Resonance spectrum in a region from 5.1 ppm to 6.5 ppm wherein, the ratio of the first set of signals to the second set of signals is greater than or equal to 2.8, wherein the composition comprises from 1 wt% to 50 wt% of the aliphatic hydrocarbon fluid based on the total weight of the composition; and,
wherein the at least one non-hydrolytic oxygen-containing compound comprises methacrylic acid and the at least one hydrocarbyl aluminum comprises trimethyl aluminum.

2. A process to prepare an alumoxane precursor, comprising:
forming a solution by, in an aliphatic hydrocarbon fluid, combining at least one hydrocarbyl aluminum with at least one non-hydrolytic oxygen-containing compound, wherein the at least one non-hydrolytic oxygen-containing compound comprises methacrylic acid and the at least one hydrocarbyl aluminum comprises trimethyl aluminum;
wherein the molar ratio of aluminum to non-hydrolytic oxygen in the solution is greater than or equal to 1.5, wherein the aliphatic hydrocarbon fluid has a boiling point of less than 70 degrees Celsius, and wherein the combining is conducted at the reflux temperature of the aliphatic hydrocarbon fluid; and
distilling the solution at a pressure of greater than 50,7 kPa (0.5 atm) to form the alumoxane precursor, wherein the precursor comprises from 0 wt% to 50 wt% of the aliphatic hydrocarbon fluid based on the total weight of the precursor.

3. The composition of claim 1 or the process of claim 2, wherein the composition or the precursor comprises from 1 wt% to 20 wt% of the aliphatic hydrocarbon fluid based on the total weight of the composition.

4. The composition of claim 1 or 3 or the process of claims 2 or 3, wherein the aliphatic hydrocarbon fluid is a C₃ to C₁₂ alkane.

5. The process of any of claims 2-4, wherein the at least one non-hydrolytic oxygen-containing compound comprises methacrylic acid, the at least one hydrocarbyl aluminum comprise trimethylaluminum and the aliphatic hydrocarbon fluid is pentane, and the solution is prepared by addition of a solution of the methacrylic acid in pentane to a solution of the trimethylaluminum in pentane at a rate sufficient to maintain a controlled reflux, that is, maintaining the reaction temperature at the boiling point of pentane which is about 36.1 degrees Celsius.

6. A composition comprising: a support material including a plurality of particles coated with the composition of any of claims 1 or 3-5.

7. The composition of claim 6 further comprising a catalyst compound.

8. A composition, wherein the composition comprises a compound represented by the Formula **(III):**

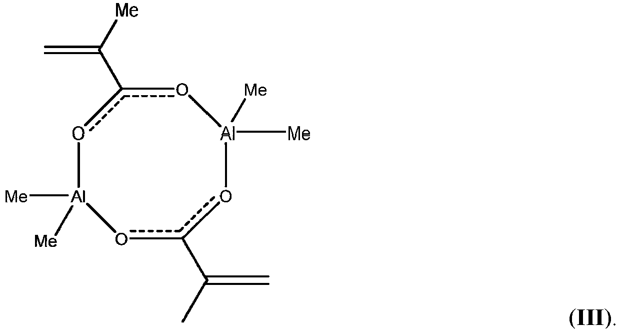

## Patentansprüche

1. Zusammensetzung, umfassend:
(i) ein Reaktionsprodukt aus mindestens einer nichthydrolytischen, sauerstoff-enthaltenden Verbindung und mindestens einem Kohlenwasserstoffaluminium; und
(ii) einer aliphatischen Kohlenwasserstoffflüssigkeit, wobei das Molverhältnis von Aluminium zu nicht-hydrolytischem Sauerstoff in der Zusammensetzung größer oder gleich 1,5 ist,
wobei das Reaktionsprodukt einen ersten Satz von Signalen in einem ¹H-Kernspinresonanzspektrum in einem Bereich von 4,5 ppm bis 5,1 ppm und einen zweiten Satz von Signalen in einem ¹H-Kernspinresonanzspektrum in einem Bereich von 5,1 ppm bis 6,5 ppm aufweist, wobei das Verhältnis des ersten Satzes von Signalen zum zweiten Satz von Signalen größer oder gleich 2,8 ist,
wobei die Zusammensetzung 1 Gew.-% bis 50 Gew.-% der aliphatischen Kohlenwasserstoffflüssigkeit, bezogen auf das Gesamtgewicht der Zusammensetzung, umfasst; und
wobei die mindestens eine nicht-hydrolytische sauerstoff-enthaltende Verbindung Methacrylsäure umfasst und das mindestens eine Kohlenwasserstoffaluminium Trimethylaluminium umfasst.

2. Verfahren zur Herstellung eines Alumoxanvorläufers, umfassend:
Bilden einer Lösung durch Zusammenbringen von mindestens einem Kohlenwasserstoffaluminium mit mindestens einer nichthydrolytischen sauerstoff-enthaltenden Verbindung in einer aliphatischen Kohlenwasserstoffflüssigkeit, wobei die mindestens eine nicht-hydrolytische, sauerstoff-enthaltende Verbindung Methacrylsäure umfasst und das mindestens eine Kohlenwasserstoffaluminium Trimethylaluminium umfasst;
wobei das Molverhältnis von Aluminium zu nicht-hydrolytischem Sauerstoff in der Lösung größer oder gleich 1,5 ist,
wobei die aliphatische Kohlenwasserstoffflüssigkeit einen Siedepunkt von weniger als 70°C aufweist, und
wobei das Zusammenbringen bei der Refluxtemperatur der aliphatischen Kohlenwasserstoffflüssigkeit durchgeführt wird; und
Destillieren der Lösung bei einem Druck von mehr als 50,7 kPa (0,5 atm), um den Alumoxanvorläufer zu bilden, wobei der Vorläufer 0 Gew.-% bis 50 Gew.-% der aliphatischen Kohlenwasserstoffflüssigkeit, bezogen auf das Gesamtgewicht des Vorläufers, umfasst.

3. Zusammensetzung nach Anspruch 1 oder Verfahren nach Anspruch 2, wobei die Zusammensetzung bzw. der Vorläufer 1 Gew.-% bis 20 Gew.-% der aliphatischen Kohlenwasserstoffflüssigkeit, bezogen auf das Gesamtgewicht der Zusammensetzung, umfasst.

4. Zusammensetzung nach Anspruch 1 oder 3 oder Verfahren nach Anspruch 2 oder 3, wobei die aliphatische Kohlenwasserstoffflüssigkeit ein C₃- bis C₁₂-Alkan ist.

5. Verfahren nach einem der Ansprüche 2 bis 4, wobei die mindestens eine nicht-hydrolytische, sauerstoff-enthaltende Verbindung Methacrylsäure umfasst, das mindestens eine Kohlenwasserstoffaluminium Trimethylaluminium umfasst und die aliphatische Kohlenwasserstoffflüssigkeit Pentan ist, und
die Lösung durch Zugabe einer Lösung der Methacrylsäure in Pentan zu einer Lösung des Trimethylaluminiums in Pentan mit einer Geschwindigkeit hergestellt ist, die ausreicht, um einen kontrollierten Reflux aufrechtzuerhalten, d.h. die Reaktionstemperatur am Siedepunkt von Pentan, der bei etwa 36,1 °C liegt, aufrechtzuerhalten.

6. Zusammensetzung, umfassend: ein Trägermaterial, das eine Vielzahl von Partikeln enthält, die mit der Zusammensetzung gemäß einem der Ansprüche 1 oder 3 bis 5 beschichtet sind.

7. Zusammensetzung nach Anspruch 6, die weiterhin eine Katalysatorverbindung umfasst.

8. Zusammensetzung, die eine Verbindung umfasst, die durch die Formel **(III)** wiedergegeben wird:

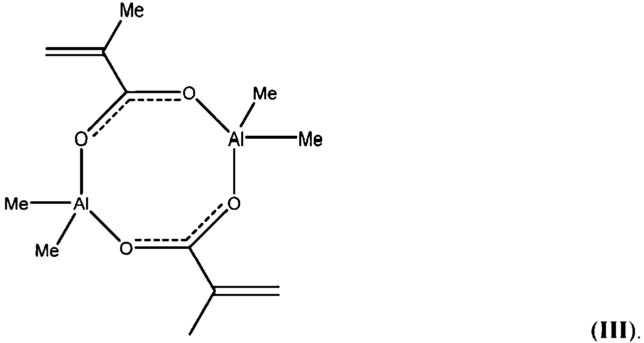

## Revendications

1. Composition comprenant : (i) un produit de réaction d'au moins un composé contenant de l'oxygène non hydrolytique et d'au moins un hydrocarbylaluminium ; et (ii) un fluide d'hydrocarbure aliphatique, dans lequel le rapport molaire d'aluminium sur oxygène non hydrolytique dans la composition est supérieur ou égal à 1,5, dans lequel le produit de réaction présente un premier ensemble de signaux dans un spectre de Résonance magnétique nucléaire ¹H dans une région de 4,5 ppm à 5,1 ppm et un deuxième ensemble de signaux dans un spectre de Résonance magnétique nucléaire ¹H dans une région de 5,1 ppm à 6,5 ppm, dans lequel le rapport du premier ensemble de signaux sur le deuxième ensemble de signaux est supérieur ou égal à 2,8, dans lequel la composition comprend de 1 % en poids à 50 % en poids du fluide d'hydrocarbure aliphatique sur la base du poids total de la composition ; et,
dans lequel l'au moins un composé contenant de l'oxygène non hydrolytique comprend l'acide méthacrylique et l'au moins un hydrocarbylaluminium comprend le triméthylaluminium.

2. Procédé de préparation d'un précurseur d'alumoxane comprenant :
la formation d'une solution en combinant, dans un fluide d'hydrocarbure aliphatique, au moins un hydrocarbylaluminium avec au moins un composé contenant de l'oxygène non hydrolytique, dans lequel l'au moins un composé contenant de l'oxygène non hydrolytique comprend l'acide méthacrylique et l'au moins un hydrocarbylaluminium comprend le triméthylaluminium ;
dans lequel le rapport molaire d'aluminium sur oxygène non hydrolytique dans la solution est supérieur ou égal à 1,5, dans lequel le fluide d'hydrocarbure aliphatique a un point d'ébullition inférieur à 70 degrés Celsius, et dans lequel la combinaison est conduite à la température de reflux du fluide d'hydrocarbure aliphatique ; et
la distillation de la solution à une pression supérieure à 50,7 kPa (0,5 atm) pour former le précurseur d'alumoxane, dans lequel le précurseur comprend de 0 % en poids à 50 % en poids du fluide d'hydrocarbure aliphatique sur la base du poids total du précurseur.

3. Composition selon la revendication 1 ou procédé selon la revendication 2, dans laquelle/lequel la composition ou le précurseur comprend de 1 % en poids à 20 % en poids du fluide d'hydrocarbure aliphatique sur la base du poids total de la composition.

4. Composition selon la revendication 1 ou 3 ou procédé selon la revendication 2 ou 3, dans laquelle/lequel le fluide d'hydrocarbure aliphatique est un alcane en C₃ à C12.

5. Procédé selon l'une quelconque des revendications 2 à 4, dans lequel l'au moins un composé contenant de l'oxygène non hydrolytique comprend l'acide méthacrylique, l'au moins un hydrocarbylaluminium comprend le triméthylaluminium et le fluide d'hydrocarbure aliphatique est le pentane, et la solution est préparée par ajout d'une solution de l'acide méthacrylique dans le pentane à une solution du triméthylaluminium dans le pentane à une vitesse suffisante pour maintenir un reflux régulé, c'est-à-dire maintenir la température de réaction au point d'ébullition du pentane qui est d'environ 36,1 degrés Celsius.

6. Composition comprenant : un matériau de support comprenant une pluralité de particules revêtues par la composition selon l'une quelconque des revendications 1 ou 3 à 5.

7. Composition selon la revendication 6, comprenant en outre un composé de catalyseur.

8. Composition, dans laquelle la composition comprend un composé représenté par la Formule (III) :
